(19) Europäisches Patentamt
European Patent Office
Office européen des brevets

(11) Veröffentlichungsnummer : **0 028 787**
**B1**

(12) # EUROPÄISCHE PATENTSCHRIFT

(45) Veröffentlichungstag der Patentschrift : **11.05.83**

(51) Int. Cl.³ : **C 09 B 62/503**, D 06 P 3/02, D 06 P 3/66

(21) Anmeldenummer : **80106746.3**

(22) Anmeldetag : **03.11.80**

(54) **Kupfer-Formazanverbindungen, Verfahren zu ihrer Herstellung und ihre Verwendung als Farbstoffe.**

(30) Priorität : **10.11.79 DE 2945464**
**20.09.80 DE 3035562**

(43) Veröffentlichungstag der Anmeldung : **20.05.81 Patentblatt 81/20**

(45) Bekanntmachung des Hinweises auf die Patenterteilung : **11.05.83 Patentblatt 83/19**

(84) Benannte Vertragsstaaten : **BE CH DE FR GB IT LI**

(56) Entgegenhaltungen :
**DE A 1 719 083**
**DE B 1 256 622**
**FR A 2 360 643**

**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt/Main 80 (DE)**

(72) Erfinder : **Schwaiger, Günther, Dr.**
**Johannesallee 41**
**D-6230 Frankfurt am Main 80 (DE)**
Erfinder : **Hoyer, Ernst, Dr.**
**Eptingweg 3**
**D-6230 Frankfurt am Main 80 (DE)**

**EP 0 028 787 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Kupfer-Formazanverbindungen, Verfahren zu ihrer Herstellung und ihre Verwendung als Farbstoffe

Die vorliegende Erfindung liegt auf dem technischen Gebiet der Kupferkomplexformazanfarbstoffe und auf dem Gebiet der Anwendung von solchen Farbstoffen als faserreaktive Farbstoffe zum Färben von bevorzugt Fasermaterialien.

Aus der deutschen Auslegeschrift 1 256 622 sind von den Tabellenbeispielen 14 und 15, des weiteren von der deutschen Auslegeschrift 17 19 083 Kupfer- und Nickelkomplexformazanfarbstoffe bekannt. Diese besitzen jedoch gewisse Mängel in ihren anwendungstechnischen Eigenschaften.

Es wurden neue Kupfer-Formazanverbindungen gefunden, die der allgemeinen Formel (1)

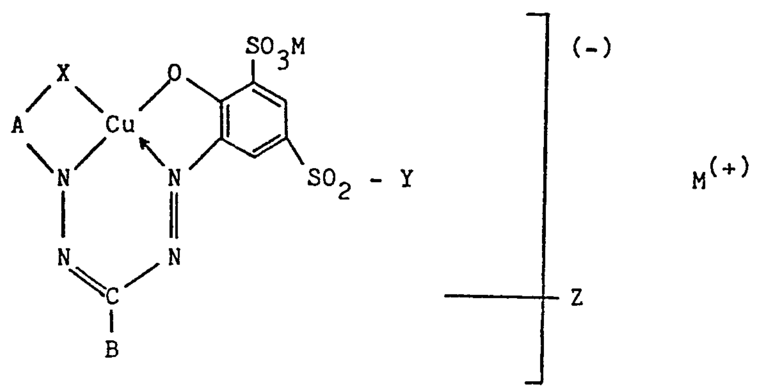

(1)

entsprechen. In dieser Formel (1) haben die einzelnen Formelreste die folgende Bedeutung :

A kann durch Z, wie nachstehend definiert, substituiert sein und ist der Phenylen- oder Naphthylenrest, die durch Substituenten, vorzugsweise zwei, insbesondere bevorzugt einen Substituenten, aus der Gruppe Halogen, wie Fluor, Chlor und Brom, Nitro, Alkyl von 1 bis 5 C-Atomen, wie Isopropyl, tert.-Butyl, tert.-Amyl oder Isobutyl, insbesondere Methyl und Äthyl, Alkoxy von 1 bis 4 C-Atomen, wie Methoxy und Äthoxy, Carbomethoxy, Carboäthoxy, Alkylsulfonyl von 1 bis 4 C-Atomen, wie Methylsulfonyl und Äthylsulfonyl, Phenylsulfonyl, Sulfamoyl, N-Mono- und N,N-Dialkylsulfamoyl mit jeweils 1 bis 4 C-Atomen im Alkyl substituiert sein können ;

B kann durch Z substituiert sein und ist eine geradoder verzweigt-kettige Alkylgruppe von 1 bis 8 C-Atomen, wie die Methyl-, Äthyl-, Isopropyl-, n-Butyl-, sek.-Butyl-, tert.-Butyl-, n-Heptyl- oder n-Octylgruppe, oder eine gerad- oder verzweigt-kettige Alkenylgruppe von 2 bis 8 C-Atomen, wie die Allylgruppe, wobei diese Alkyl- und Alkenylgruppen noch durch den Phenylrest substituiert sein können, der wiederum durch Substituenten aus der Gruppe Methyl, Äthyl, Methoxy, Äthoxy, Fluor, Chlor, Brom und Sulfamoyl substituiert sein kann, oder ist der Phenyl- oder Naphthylrest, die durch Substituenten, vorzugsweise 1 oder 2 Substituenten, aus der Gruppe Hydroxy, Nitro, Halogen, wie Fluor, Brom und Chlor, Alkyl von 1 bis 5 C-Atomen, vorzugsweise Methyl und Äthyl, Alkoxy von 1 bis 4 C-Atomen, vorzugsweise Methoxy und Äthoxy, und Carbalkoxy mit 1 bis 4 C-Atomen im Alkylrest, wie Carbomethoxy und Carbäthoxy, substituiert sein können, oder ist der Rest des Furans, Thiophens, Pyrrols, Imidazols, Indols, Pyrazols, Pyridins, Pyrimidins, Chinolins oder Benzimidazols, wobei diese heterocyclischen Reste an den aromatischen Kohlenstoffatomen durch Chlor, Phenyl, Methoxy, Äthoxy, Methyl und Äthyl substituiert und die Wasserstoffatome in den NH-Gruppen dieser Heterocyclen durch Methyl, Äthyl oder Benzyl ersetzt sein können, oder ist ein Wasserstoffatom ;

Z ist eine wasserlöslichmachende Gruppe, vorzugsweise die Sulfo-, Carboxy- und Phosphonsäuregruppe, als ein zu den oben genannten Substituenten von A und B gegebenenfalls zusätzlicher Substituent an A und B, der zwingend im Formazanmolekül einmal, zweimal oder dreimal enthalten ist und an ein aromatisches Kohlenstoffatom oder an ein aliphatisches Kohlenstoffatom, — beispielsweise auch über eine Methylen- oder Äthylenbrücke an ein aromatisches Kohlenstoffatom, — von A und B, vorzugsweise an einen aromatischen Kern, gebunden sein kann ;

Cu ist Kupfer ;

X ist ein Sauerstoffatom oder eine Carbonyloxygruppe der Formel —CO—O—, die in A in ortho-Stellung zum Stickstoffatom an A gebunden sind ;

Y ist die Vinylgruppe oder die β-Thiosulfatoäthyl-Gruppe der Formel $-CH_2-CH_2-S-SO_3M$ mit M der nachstehenden Bedeutung ;

M ist ein Wasserstoffatom oder das Äquivalent eines Metalls, vorzugsweise ein Alkalimetall oder eines Erdalkalimetalls, wie insbesondere Natrium oder Kalium und des Calciums.

Sofern Z zwei- oder dreimal an das Molekül gebunden ist, kann er verschiedene Bedeutungen haben. Bevorzugt sind Verbindungen der allgemeinen Formel (1), in welchen Z ein- oder zweimal im Molekül gebunden enthalten ist.

Sofern B ein oben genannter phenylsubstituierter Alkyl- oder Alkenylrest ist, ist er bevorzugt der Benzyl- oder Styrylrest.

Die neuen Verbindungen der Allgemeinen Formel (1) können in saurer Form vorliegen. Bevorzugt sind sie in Form ihrer Salze, insbesondere der oben genannten Alkali- und Erdalkalimetallsalze. Sie finden, bevorzugt in Form der Alkalimetallsalze, Verwendung zum Färben (im allgemeinen Sinne einschließlich des Bedruckens) von hydroxygruppenhaltigen, amino- und carbonamidgruppenhaltigen Materialien.

Von den erfindungsgemäßen Verbindungen der allgemeinen Formel (1) sind diejenigen bevorzugt, in welchen A den Phenylenrest bedeutet, der durch 1 oder 2, bevorzugt einen Substituenten aus der Gruppe Chlor, Brom, Nitro, Methyl, Äthyl, Methoxy, Äthoxy, Carbomethoxy, Carboäthoxy, Sulfamoyl und N,N-Dimethylsulfamoyl substituiert sein kann, B den Phenylrest bedeutet, der durch 1 oder 2 Substituenten aus der Gruppe Chlor, Methyl, Äthyl, Methoxy, Äthoxy, Carbomethoxy, Carbäthoxy und Nitro substituiert sein kann, Z die oben genannte Bedeutung besitzt, vorzugsweise die Sulfogruppe ist, und als zusätzlicher Substituent an A und B ein- oder zweimal an diese aromatischen Kerne gebunden ist und M, X und Y die obengenannten Bedeutungen haben. Insbesondere bevorzugt sind Verbindungen der Formel (1), in welcher A den Phenylenrest darstellt, der durch eine Methyl-, Äthyl-, Methoxy- oder Äthoxygruppe oder ein Chloratom substituiert sein kann, B den Phenylrest bedeutet, der durch eine Methyl-, Äthyl-, Methoxy-oder Äthoxygruppe oder durch ein Chloratom substituiert sein kann, Z für die Sulfogruppe steht, die ein- oder zweimal an das Molekül an A und/oder B gebunden ist, X den Carbonyloxyrest darstellt und M und Y die obengenannten Bedeutungen haben.

Insbesondere sind bevorzugt Verbindungen der Formel (1), in welchen X den Carbonyloxyrest darstellt, A der Phenylenrest ist, der durch die Sulfogruppe Z, vorzugsweise in m-oder p-Stellung zum Stickstoffatom, substituiert ist, B den Phenylrest bedeutet, der durch ein Chloratom, das vorzugsweise in 2- oder 4-Stellung gebunden ist, substituiert sein kann, und M und Y die obengenannten Bedeutungen haben.

Die vorliegende Erfindung betrifft weiterhin Verfahren zur Herstellung der oben genannten und definierten Verbindungen der allgemeinen Formel (1). Die Verfahren sind dadurch gekennzeichnet, daß man eine aromatische Hydrazonverbindung der allgemeinen Formel (2)

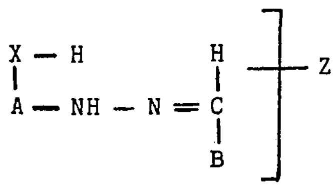

(2)

in welcher A, B, X und Z die oben genannten Bedeutungen haben, mit der Diazoniumverbindung eines aromatischen Amins der Formel (3)

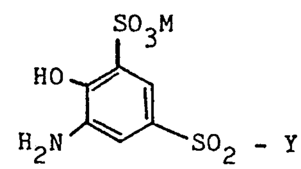

(3)

mit M und Y der obengenannten Bedeutung und mit einem kupferabgebenden Mittel umsetzt. Man kann hierbei in üblicher und analog bekannter Verfahrensweise zur Herstellung von Metallkomplexformazanfarbstoffen verfahren. Vorzugsweise wird das erfindungsgemäße Verfahren bei einem pH-Wert von 4 bis 7, insbesondere von 5 bis 7, und bei einer Temperatur zwischen etwa 0 bis 20 °C durchgeführt.

Die Zugabe der Reaktionskomponenten kann beliebig sein, jedoch läßt das Verfahren sich leicht als Dreikomponentenreaktion durchführen.

Es hat sich als vorteilhaft erwiesen, nach der Kupplungs- und Metallisierungsreaktion das Reaktionsgemisch mit einer starken Mineralsäure, wie beispielsweise Salzsäure, auf einen pH-Wert von unterhalb 2, beispielsweise auf einen pH-Wert von etwa 1, einzustellen und das Reaktionsgemisch bei diesem pH-Wert noch einige Zeit, beispielsweise 30 Minuten bis zwei Stunden, bei den Thiosulfatoäthylsulfonyl-Verbindungen bei Raumtemperatur (15-30 °C), bei den Vinylsulfonyl-Verbindungen bei Raumtemperatur (15-30 °C) oder erhöhter Temperatur (bis ca. 50 °C), gegebenenfalls unter Rühren, zu halten. Hierbei ist darauf zu achten, daß die gebildete erfindungsgemäße Verbindung in Lösung ist. Dies erreicht man teils durch Vergrößerung des Lösemittelvolumens, teils durch Temperaturerhöhung bis, sofern zulässig, etwa 50 °C. Durch diese Nachbehandlung werden verschiedene Echtheiten, wie die Lichtechtheit, Farbstärke und Reinheit der Farbnuance wesentlich verbessert. Es erübrigt sich hiermit auch die Trocknung bei Temperaturen über 100 °C, wie beispielsweise bei etwa 150 °C, die zur Verringerung der Farbausbeute

der hergestellten Kupferkomplexformazanverbindungen führen kann.

Als kupferabgebende Verbindungen kommen beispielsweise die einfachen und die komplexen Salze des Kupfers infrage, wie beispielsweise Kupfersulfat, Kupferchlorid, Kupferacetat oder Kupfercarbonat und die Kupfersalze der Salicylsäure oder Weinsäure.

Verwendet man die Kupfersalze von Mineralsäuren, so arbeitet man zweckmäßig in Gegenwart eines säureabstumpfenden Mittels, wie beispielsweise eines Alkali- oder Erdalkalihydroxides oder -carbonats oder eines Alkalisalzes einer niederen Alkancarbonsäure, wie der Essigsäure, oder eines basischen Alkalisalzes der Phosphorsäure. Diese Alkali- oder Erdalkaliverbindungen sind insbesondere die Natrium-, Kalium- und Calciumverbindungen, bevorzugt beispielsweise Natriumhydroxid, Kaliumhydroxid, Calciumhydroxid, Natrium- und Kaliumcarbonat, Calciumcarbonat, Natriumbicarbonat, Natriumacetat, Dinatriumhydrogenphosphat und Trinatriumphosphat.

Das kupferabgebende Mittel wird in äquimolaren Mengen verwendet, so daß auf eine zu bildende Verbindung der Formel (1) ein Kupferatom entfällt. Die Metallisierung geht üblicherweise schon bei Raumtemperatur zu Ende.

Die Herstellung der Kupferkomplexformazanverbindungen der allgemeinen Formel (1) kann man beispielsweise in der Weise durchführen, daß man die Hydrazonverbindungen der allgemeinen Formel (2) mit einem Alkali, wie Natronlauge oder Natriumcarbonat, in Wasser bei Raumtemperatur löst ; vorzugsweise hält man den pH-Wert bei 6 bis 7. Anschließend gibt man die Diazoniumsalzlösung des Amins der allgemeinen Formel (3) hinzu, wobei man den pH-Wert der Reaktionslösung auf der einen Seite bezüglich der Thiosulfatoäthylsulfonyl-Verbindungen nicht alkalisch, bezüglich der Vinylsulfonyl-Verbindungen nicht zu stark alkalisch (wie vorteilhaft nicht größer als pH gleich 8.5), auf der anderen Seite nicht zu stark sauer (wie vorteilhaft nicht kleiner als pH gleich 3) werden läßt, um zum einen die Diazo- bzw. Thiosulfatoäthylsulfonyl- oder Vinylsulfonyl-Gruppe im Alkalischen nicht zu schädigen und um zum anderen eine Ausfällung des Hydrazons und damit eine heterogene Reaktion im Sauren zu vermeiden. Vorzugsweise arbeitet man bei einem pH-Wert zwischen 4 bis 7, insbesondere 5 bis 7. Die Reaktionstemperatur soll zweckmäßig 20 °C, vorteilhaft 15 °C möglichst nicht überschreiten. Gleichzeitig, d. h. auch — zusammen mit —, oder nach der Zugabe der Diazoniumverbindung gibt man die äquimolare Menge an dem kupferabgebenden Mittel, beispielsweise als Kupfersulfat in wäßriger Lösung, hinzu. Auch die Metallisierungsreaktion wird vorteilhaft bei einem pH-Wert von 4 bis 7, insbesondere 5 bis 7, durchgeführt. Metallisierungs- und Kupplungsreaktion können nebeneinander herlaufen. Die Metallisierungsreaktion läuft verhältnismäßig schnell ab. Vor der Isolierung der hergestellten Metallkomplexformazanverbindung ist es, wie oben erwähnt, vorteilhaft, die Reaktionslösung mit beispielsweise konzentrierter Salzsäure oder Schwefelsäure auf einen pH-Wert von etwa 1 anzusäuern und etwa eine Stunde bei Raumtemperatur zu rühren ; anschließend stellt man auf einen pH-Wert von 5 bis 6 und isoliert die hergestellte erfindungsgemäße Metallkomplexformazanverbindung in üblicher Weise, beispielsweise durch Aussalzen mittels eines Elektrolyten, wie Natriumchlorid oder Kaliumchlorid. Die Verbindung kann gegebenenfalls auch durch Eindampfen der Lösung, wie beispielsweise Sprühtrocknung, isoliert werden.

Die erfindungsgemäßen Verbindungen können aber auch hergestellt werden, indem man in gleicher Weise wie oben beschrieben vorgeht, jedoch anstelle des Amins der allgemeinen Formel (3) die entsprechende 4-(β-Sulfatoäthylsulfonyl)-2-amino-phenol-6-sulfonsäure oder die entsprechende 4-(β-Hydroxyäthylsulfonyl)-2-amino-phenol-6-sulfonsäure einsetzt. Die so erhaltene Metallkomplexformazanverbindung enthält dann anstelle der Vinylsulfonylgruppe in den erfindungsgemäßen Verbindungen der Formel (1) die β-Hydroxy- bzw. β-Sulfatoäthylsulfonylgruppe. Die β-Hydroxyäthylsulfonyl-Verbindung kann in an und für sich üblicher Weise mit einem Sulfatierungsmittel, wie Schwefelsäure, vorzugsweise mit Amidosulfonsäure oder Chlorsulfonsäure in Gegenwart von Pyridin oder einem Homologen des Pyridins, in die Sulfatoverbindung überführt werden. Die Metallkomplexformazanverbindung mit der β-Sulfatoäthylsulfonylgruppe wird sodann in deren Vinylsulfonyl-Derivat in an und für sich für diese Reaktion üblicher Weise in alkalisch-wäßriger Lösung bei einem pH-Wert zwischen 8 und 13, beispielsweise mittels Natronlauge oder Natriumcarbonat oder deren entsprechenden Kalium- oder Calciumverbindungen, und bei teils erhöhter Temperatur, beispielsweise etwa 40 bis 60 °C, übergeführt. Setzt man beispielsweise Natronlauge ein, so arbeitet man vorzugsweise bei einem pH-Wert von 11 bis 13 und bei 5-25 °C, bei Verwendung von beispielsweise Natriumcarbonat vorzugsweise bei einem pH-Wert von 8,5 bis 10 und bei 50-55 °C. Diese Bedingungen gelten auch, wenn man anstelle des Amins der Formel (3) dessen entsprechende 4-(β-Sulfatoäthylsulfonyl)-2-aminophenol-6-sulfonsäure-Verbindung einsetzt, da unter diesen Bedingungen die β-Sulfatoäthylsulfonylgruppe in die Vinylsulfonylgruppe übergeführt wird.

Die erfindungsgemäßen Thiosulfatoäthylsulfonyl-Verbindungen der allgemeinen Formel (1) können auch weiterhin so hergestellt werden, daß man von den erfindungsgemäßen Vinylsulfon-Metallkomplexformazanverbindungen ausgeht und diese analog bekannten Verfahrensweisen mit einem Salz der Thioschwefelsäure, wie beispielsweise Natriumthiosulfat, vorteilhaft in einem Überschuß, vorzugsweise von 20 bis 50 Mol- %, in wäßriger, schwach saurer Lösung, vorteilhaft bei einem pH-Wert zwischen 5 und 6,8, insbesondere 5,7 bis 6,2, und bei erhöhter Temperatur, wie beispielsweise 30 bis 80 °C, insbesondere 60 bis 75 °C, umsetzt.

Vorteilhaft jedoch ist die anfangs erwähnte Herstellung unter Verwendung des aromatischen Amins der allgemeinen Formel (3).

Geht man bei der Verfahrensvariante zur Herstellung der allgemeinen Formel (1) von der 4-(β-Hydroxyäthylsulfonyl)-2-amino-phenol-6-sulfonsäure aus, so kann die Umsetzung zu den Metallkomplexformazanverbindungen auch bei einem pH-Wert zwischen 4 und 12 erfolgen ; zur Metallisierung sollte jedoch ein pH-Wert zwischen 4 und 8 eingestellt werden.

Die als Ausgangsverbindungen dienenden Hydrazonverbindungen der allgemeinen Formel (2) gewinnt man aus den entsprechenden Phenyl- und Naphthylhydrazinen der allgemeinen Formel H—X—A—NH—$NH_2$ (mit A und X den oben genannten Bedeutungen), — die in an und für sich üblicher und bekannter Weise, beispielsweise aus den entsprechenden Diazoniumverbindungen mit Salzen der schwefligen Säure unter Hydrolyse der intermediären N-Sulfonsäuren mit Mineralsäuren hergestellt werden können, — vorzugsweise ohne deren Zwischenisolierung, durch Umsetzung mit einem Aldehyd der allgemeinen Formel B—CHO (mit B der oben genannten Bedeutung), wobei die Hydrazine und Aldehyde so ausgewählt werden müssen, daß sie insgesamt eine, zwei oder drei wasserlöslichmachende Gruppen Z an A und/oder B gebunden enthalten.

Aldehyde entsprechend der Formel B—CHO mit B der oben genannten Bedeutung, wobei B auch durch Z substituiert sein kann, die als Ausgangsverbindungen zur Herstellung der Hydrazone der allgemeinen Formel (2) dienen, sind beispielsweise Benzaldehyd, 2-, 3- oder 4-Methyl-benzaldehyd, 4-Methylbenzaldehyd-3-sulfonsäure, 2-, 3- oder 4-Methoxy-benzaldehyd, 4-Methoxy-3-chlor-benzaldehyd, 3-Nitro-benzaldehyd, 2-Hydroxy-benzaldehyd, 2- oder 4-Chlor-benzaldehyd, 2,4-Dichlor-benzaldehyd, 2-Chlorbenzaldehyd-5-sulfonsäure, Benzaldehyd-2-sulfonsäure, Benzaldehyd-3-sulfonsäure, Benzaldehyd-4-sulfonsäure, Benzaldehyd-2,4-disulfonsäure, 1-Naphthaldehyd, 2-Naphthaldehyd, Furan-2-aldehyd, Thiophen-2-aldehyd, Pyrrol-2-aldehyd, Imidazol-2-aldehyd, Pyrazol-5-aldehyd, Pyridin-2-aldehyd, Pyridin-3-aldehyd, Pyridin-4-aldehyd, Pyrimidin-5-aldehyd, Chinolin-4-aldehyd, Benzimidazol-2-aldehyd, Acetaldehyd, Propionaldehyd, n-Butyraldehyd, Oenanthaldehyd, Acrylaldehyd, Crotonaldehyd, Phenacetaldehyd oder Zimtaldehyd.

Aromatische Amine, die als Ausgangsverbindungen für die entsprechenden aromatischen Hydrazine dienen, sind beispielsweise Aminophenol, 4- oder 5-Methyl-2-aminophenol, 4- oder 5-Sulfo-2-aminophenol, 4-Sulfo-6-carboxy-2-aminophenol, 4-Methoxy-2-aminophenol, 5-Methylsulfonyl-2-aminophenol, 4-Dimethylaminosulfamoyl-2-aminophenol, 5-Nitro-2-aminophenol, 4-Brom-2-aminophenol, 1-Amino-2-hydroxy-naphthalin-4,6-disulfonsäure, 1-Amino-2-hydroxy-6-nitro-naphthalin-4-sulfonsäure, 1-Amino-2-hydroxy-6-chlor-naphthalin-4-sulfonsäure, 2-Amino-benzoesäure, 4- oder 5-Sulfo-2-aminobenzoesäure, 5-Nitro-2-aminobenzoesäure, 5-Chlor-2-aminobenzoesäure, 5-Methoxy-2-aminobenzoesäure.

Das als Ausgangsverbindung dienende aromatische Amin der Formel (3) läßt sich in an und für sich bekannter Weise herstellen, beispielsweise durch Umsetzung von 4-(β-Hydroxy-äthylsulfonyl)-2-aminophenol mit konzentrierter, vorzugsweise Schwefeltrioxid enthaltender Schwefelsäure, und Überführung der hergestellten veresterten und sulfierten Verbindung in die entsprechende 4-(β-Thiosulfatoäthyl)- oder 4-Vinyl-sulfonyl-2-aminophenol-6-sulfonsäure, analog wie oben erwähnt.

Die erfindungsgemäßen Metallkomplexformazanverbindungen besitzen wertvolle Farbstoffeigenschaften ; infolge ihrer Vinyl-sulfonylgruppe bzw. β-Thiosulfatoäthylsulfonylgruppe besitzen sie auch faserreaktive Eigenschaften. Sie werden bevorzugt zum Färben (im allgemeinen Sinne) von hydroxy-, amino- oder carbonamidgruppenhaltigen Materialien, beispielsweise in Form von Flächengebilden, wie Folien, Papier und Leder, oder in der Masse, wie Polyamid und Polyurethan, insbesondere von solchen Materialien in Faserform, verwendet.

Die vorliegende Erfindung betrifft somit auch die Verwendung der Verbindungen der allgemeinen Formel (1) zum Färben (einschließlich der Massefärbung und des Bedruckens) dieser Materialien bzw. Verfahren zum Färben solcher Materialien in an und für sich üblicher Verfahrensweise, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern ; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Verbindungen der Formel (1) lassen sich auf den genannten Substraten, insbesondere auf den genannten Fasermaterialien, nach den für wasserlösliche Farbstoffe, insbesondere für faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie beispielsweise Natriumchlorid oder Natriumsulfat, sehr gute Farbausbeuten. Man färbt bei Temperaturen zwischen 60 und 100 °C, gegebenenfalls bei Temperaturen bis zu 120 °C unter Druck, gegebenenfalls in Gegenwart von üblichen Färbereihilfsmitteln, in wäßrigem Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes

beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig, beispielsweise in Anwesenheit von Natriumbicarbonat oder anderer säurebindender Mittel in der Druckpaste und durch anschließendes Dämpfen bei 101 bis 103 °C, oder zweiphasig, beispielsweise mit neutraler oder schwach saurer Druckfarbe bedruckt und dann entweder durch Hindurchführen durch ein heißes elektrolythaltiges alkalisches Bad oder durch Überklotzen mit einer alkalischen elektrolythaltigen Klotzflotte und anschließendem Verweilen dieses behandelten Materials oder anschließendem Dämpfen oder anschließender Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kalium-verbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natrium-trichloracetat, Wasserglas und Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden ; die Cellulosefärbungen zeigen nach der üblichen Nachbehandlung durch Spülen zur Entfernung von nicht fixierten Farbstoffanteilen ausgezeichnete Naßechtheiten.

Für das coloristische Verhalten der erfindungsgemäßen Verbindungen ist besonders hervorzuheben, daß sie sich durch gute Stabilität in Druckpasten und Klotzflotten, auch in Anwesenheit von Alkali, durch ein sehr gutes Ziehvermögen aus langer Flotte, durch guten Farbaufbau nach den üblichen Färbe- und Druckverfahren, durch eine gleiche Farbtiefe beim Färben auf Baumwolle und Regeneratcellulosefasern durch ein egales Warenbild der mit ihnen hergestellten Färbungen und Drucke und ebenfalls durch einen gleichmäßigen Ausfall der Färbungen aus langer Flotte bei Zugabe verschiedener Mengen an Elektrolyten auszeichnen.

Die Färbungen auf Polyurethanfasern und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure und/oder auf Basis eines Umsetzungsproduktes von beispielsweise Stearylamin mit Äthylenoxid. In der Regel wird das zu färbende Material bei einer Temperatur von etwa 40 °C in das zuerst schwach alkalisch eingestellte Bad eingebracht, dort einige Zeit darin bewegt, das Färbebad dann auf einen schwach sauren, vorzugsweise schwach essigsauren, pH-Wert eingestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden.

Die mit den erfindungsgemäßen Verbindungen hergestellten Färbungen und Drucke zeichnen sich durch sehr reine, vorwiegend blaue Farbtöne aus. Insbesondere die Färbungen und Drucke auf Cellulosefasermaterialien besitzen eine hohe Farbstärke sowie gute bis sehr gute Gebrauchs- und Fabrikationsechtheiten, wie eine sehr gute Licht- und Reibechtheit und vorzügliche Naßechtheiten, wie Wasch-, Chlorbadewasser, Chlorbleich-, Meerwasser-, Walk-, Alkali-, Säure und Schweißechtheiten, weiterhin eine gute Bügel- und eine gute Trockenreinigungsechtheit. Nicht fixierte Anteile an Farbstoff lassen sich leicht und vollständig wieder aus dem Fasermaterial auswaschen, was eine wesentliche Voraussetzung für die guten Naßechtheiten der erhältlichen Färbungen ist. Desweiteren sind die Färbungen gegen die üblichen Kunstharzappreturen stabil. Die erfindungsgemäßen Verbindungen (Farbstoffe) erreichen teils den üblichen Anthrachinonstandard bezüglich der Reinheit des Farbtones und haben darüber hinaus den Vorteil der sehr viel leichteren Ätzbarkeit gegenüber den erwähnten Anthrachinonfarbstoffen.

Verbindungen der Formel (1), die insgesamt zwei Sulfonsäuregruppen, vorzugsweise aber eine niedere Alkylsulfonyl- oder eine gegebenenfalls durch niederes Alkyl substituierte Sulfamoylgruppe

enthalten, besitzen gegenüber Wolle und sich färberisch ähnlich verhaltendem Polyamidmaterial eine sehr gute Affinität und ziehen auf diesem Material vielfach schon aus neutralem bis schwach saurem Bade vollständig auf. Gegebenenfalls kann die Wasserlöslichkeit dieser Farbstoffe noch mit Hilfe von anionaktiven oder nichtionogenen Netz- oder Dispergiermitteln oder Coupagemitteln erhöht werden.

Die nachstehenden Beispiele dienen zur Erläuterung der Erfindung. Die darin genannten Teile sind Gewichsteile, die Prozentangaben stellen Gewichtsprozente dar, sofern nicht anders vermerkt. Gewichtsteile beziehen sich zu Volumenteilen wie Kilogramm zu Liter.

Beispiel 1

40,0 Teile des Hydrazons aus 2-Carboxy-phenylhydrazin-4-sulfonsäure mit Benzaldehyd-3-sulfonsäure werden in 200 Teilen Wasser von 20 bis 25 °C angeschlämmt und durch Zugabe einer wäßrigen Natronlauge bei einem pH-Wert von 6,5 bis 7 gelöst. Diese Lösung wird bei einer Temperatur von 5 bis 15 °C mit der wäßrigen Diazoniumsalzlösung aus 4-(β-Thiosulfatoäthylsulfonyl)-6-sulfo-2-aminophenol, die durch übliche Diazotierung in wäßriger Lösung von 39,3 Teilen dieses Aminophenols erhalten wurde, und anschließend tropfenweise bei 10 bis 15 °C mit 100 Volumenteilen einer wäßrigen 1-molaren Kupfersulfatlösung innerhalb von 15 Minuten versetzt, wobei man jeweils mit insgesamt 19 Teilen Natriumcarbonat den pH-Wert zwischen 5,5 und 6,5 hält. Man rührt noch 1 bis 2 Stunden bis zur Beendigung der Kupplungsreaktion bei Raumtemperatur nach und stellt sodann die Reaktionsmischung mit 30 Volumenteilen konzentrierter Salzsäure auf einen pH-Wert von 1. Man rührt diese stark saure Lösung eine Stunde weiter, versetzt dann mit Kaliumcarbonat bis zu einem pH-Wert von 5,5 und fällt sodann die gebildete Kupferkomplex-Formazanverbindung mittels Kaliumchlorid aus, filtriert sie ab, wäscht sie mit verdünnter wäßriger Kaliumchloridlösung und trocknet sie bei 80 °C. Es wird ein dunkles Pulver erhalten, das sich in Wasser mit dunkelblauer Farbe löst. Es enthält als elektrolythaltiges Pulver das Alkalimetallsalz, vorwiegend das Kaliumsalz, der Verbindung der Formel

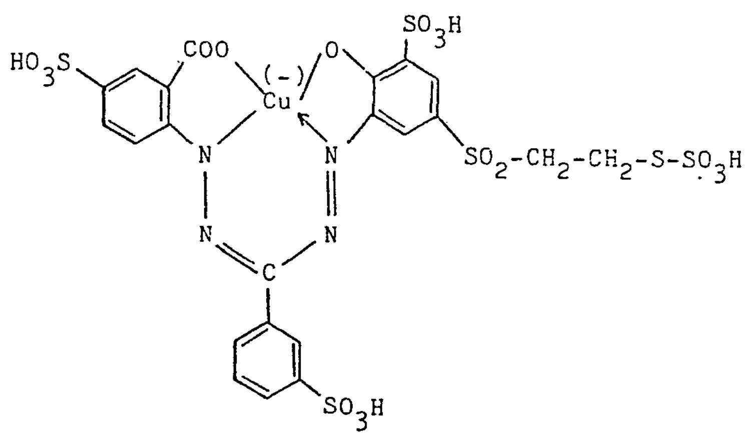

Diese Verbindung eignet sich sehr gut als Farbstoff und färbt Baumwolle und regenerierte Cellulosefasern aus langer Flotte in Gegenwart eines säurebindenden Mittels in reinen blauen Farbtönen. Die in üblicher Weise nach 10-minütigem Seifen und Spülen mit Wasser nachbehandelten Färbungen zeigen sich als sehr licht- und naßecht.

Beispiel 2

40,0 Teile des Hydrazons aus 2-Carboxy-phenylhydrazin-4-sulfonsäure mit Benzaldehyd-4-sulfonsäure werden wie in Beispiel 1 gelöst. Diese Lösung versetzt man mit der wäßrigen Diazoniumsalzlösung, die man in üblicher Weise durch Diazotierung von 37,7 Teilen 4-(β-Sulfatoäthylsulfonyl)-6-sulfo-2-aminophenol erhalten hat ; die Arbeitstemperatur soll 20 °C nicht überschreiten, der pH-Wert wird auf 5,5 bis 6,5 gehalten. Sodann gibt man bei 10 bis 15 °C 100 Volumenteile einer wäßrigen 1-molaren Kupfersulfatlösung innerhalb von 15 Minuten tropfenweise hinzu und hält auch hier den pH bei 5,5 bis 6,5 mittels Natriumcarbonat. Man rührt zur Beendigung der Kupplung 1 bis 2 Stunden bei Raumtemperatur nach und stellt sodann mit 30 Volumenteilen konzentrierter Salzsäure einen pH von etwa 1 ein. Diese stark saure Reaktionsmischung wird noch eine Stunde nachgerührt und sodann mit Natriumcarbonat (etwa 18 Teile) auf einen pH-Wert von 6,8 bis 7,2 eingestellt.

Die in der Lösung enthaltene β-Sulfatoäthylsulfonyl-Kupferkomplex-Formazanverbindung soll in die entsprechende Vinylsulfonyl-Verbindung übergeführt werden. Hierzu erwärmt man die Lösung auf 50 bis 55 °C und gibt ihr 21 Teile Natriumcarbonat in 76 Teilen Wasser innerhalb von 5 bis 10 Minuten hinzu ; hierbei steigt der pH-Wert auf etwa 9,2 an. Zur vollständigen Umsetzung wird 30 bis 40 Minuten gerührt, sodann mit etwa 20 Volumenteilen etwa 17 %iger Salsäure bei einer Temperatur von 50 bis 55 °C auf den pH-Wert von 6,5 eingestellt.

Die so hergestellte Vinylsulfon-Kupferkomplexformazanverbindung der Formel (in Form der freien Säure geschrieben)

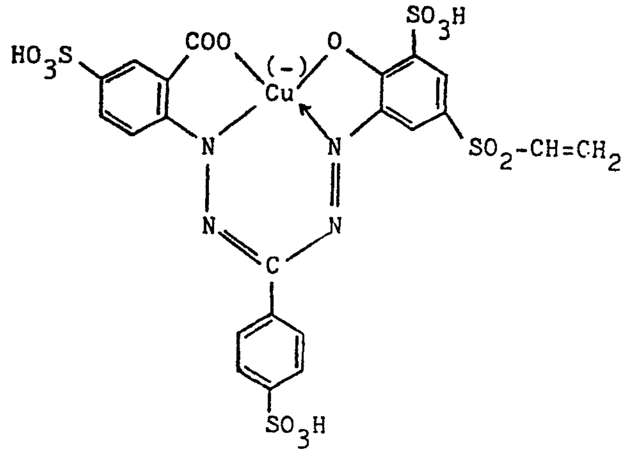

wird auf übliche Weise durch Sprühtrocknung isoliert. Das erhaltene dunkle Pulver enthält das Natriumsalz dieser Kupferkomplexformazanverbindung, das sehr gute Farbstoffeigenschaften besitzt und nach üblichen Applikations- und Fixiermethoden auf Cellulosefasermaterialien oder Polyamidfasermaterialien kräftige, klare, blaue Färbungen und Drucke mit hoher Farbstärke und guten Echtheiten liefert.

Beispiel 3

Zur Herstellung der erfindungsgemäßen Verbindung der Formel

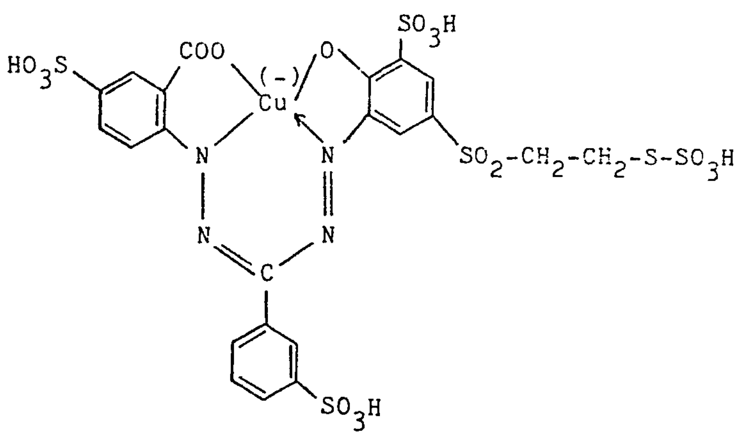

kann man von der Vinylsulfonyl-Kupferformazanverbindung des Beispieles 2 ausgehen, die jedoch nicht erst isoliert zu werden braucht. Die dort angegebene Syntheselösung wird auf einen pH-Wert von 6,8 bis 7,2 (statt etwa 6,5) gestellt und sodann auf 70 bis 75 °C erwärmt; es werden ihr 37,5 Teile Natriumthiosulfat (krist.) zugegeben, und die Lösung wird bei einem pH-Wert von 5,7 bis 6,2 vier Stunden lang gerührt, wobei dieser pH-Wert durch portionsweise Zugabe von 40 Volumenteilen einer wäßrigen 50 %igen Essigsäure gehalten wird. Anschließend gibt man Kieselgur hinzu, klärt die Lösung und versetzt das Filtrat mit Kaliumchlorid in einer Menge von 15 %, bezogen auf das Volumen des Filtrats. Unter Rühren läßt man sie abkühlen, saugt die ausgeschiedene Verbindung ab und trocknet sie bei 80 °C.

Man erhält ein dunkles Pulver, das sich in Wasser mit dunkelblauer Farbe löst. Es enthält das Alkalimetallsalz, vorwiegend Kaliumsalz, der Verbindung der obigen Formel. Diese Kupferkomplexformazanverbindung eignet sich ebenfalls sehr gut als wasserlöslicher Farbstoff zum Färben von Cellulosefasermaterialien und Polyamidfasermaterialien. Nach üblichen Applizier- und Fixiermethoden erhält man kräftige, klare, blaue Färbungen und Drucke mit hoher Farbstärke und guten Echtheiten.

Beispiel 4

Man schlämmt 35,5 Teile des Hydrazons aus 2-Carboxy-phenyl-hydrazin-5-sulfonsäure und 4-Chlor-

benzaldehyd in 250 Teilen Wasser von 20 bis 25 °C an und löst es mit konzentrierter wäßriger Natronlauge bei einem pH-Wert von 6,5 bis 7. Diese Lösung wird bei einem pH-Wert von etwa 6 und einer Temperatur von 5 bis 15 °C mit der wäßrigen Diazoniumsalzlösung, erhalten durch übliche Diazotierung von 27,9 Teilen 4-Vinylsulfonyl-6-sulfo-2-aminophenol und anschließend tropfenweise mit einer wäßrigen Lösung von 25 Teilen kristallinem Kupfersulfat in 125 Teilen Wasser bei einer Temperatur von 10 bis 15 °C innerhalb von 15 Minuten versetzt, wobei man in beiden Fällen den pH-Wert mittels insgesamt 19 Teilen Natriumcarbonat auf 5,5 bis 6,5 hält.

Man rührt noch 1 bis 2 Stunden bis zur Beendigung der Kupplungsreaktion bei Raumtemperatur nach und stellt sodann die Reaktionslösung mit 30 Volumenteilen konzentrierter Salzsäure auf einen pH-Wert von etwa 1. Es wird eine Stunde nachgerührt, sodann mit Natriumcarbonat auf einen pH-Wert von 6,5 gestellt. Die so hergestellte Kupferkomplex-Formazanverbindung der Formel (in Form der freien Säure geschrieben)

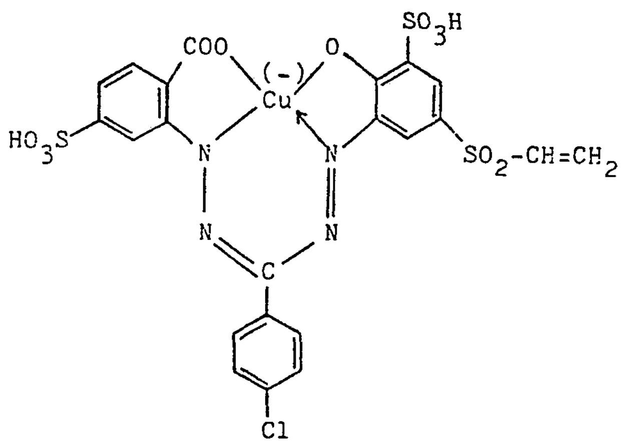

kann durch Sprühtrocknung oder durch Aussalzen mittels Natriumchlorid oder Kaliumchlorid als Natrium- oder Kaliumsalz isoliert werden. Sie zeigt sehr gute Farbstoffeigenschaften und färbt nach üblichen Applikations- und Fixiermethoden für faserreaktive Farbstoffe beispielsweise Cellulosefasermaterialien in tiefen, klaren, blauen Farbtönen mit sehr guten Licht- und Naßechtheiten.

## Beispiel 5

Man stellt die Vinylsulfonverbindung des Beispieles 4 her, ohne sie zu isolieren. Die saure Syntheselösung wird mit etwa 18 Teilen Natriumcarbonat auf einen pH-Wert von 6,8 bis 7,2 gestellt und sodann gemäß den Angaben des Beispieles 3 mittels Natriumthiosulfat in die erfindungsgemäße Thiosulfatoäthylsulfon-Kupferkomplexformazanverbindung übergeführt und durch Aussalzen mittels Natrium- oder Kaliumchlorid isoliert. Man erhält das entsprechende Alkalimetallsalz der Verbindung der Formel

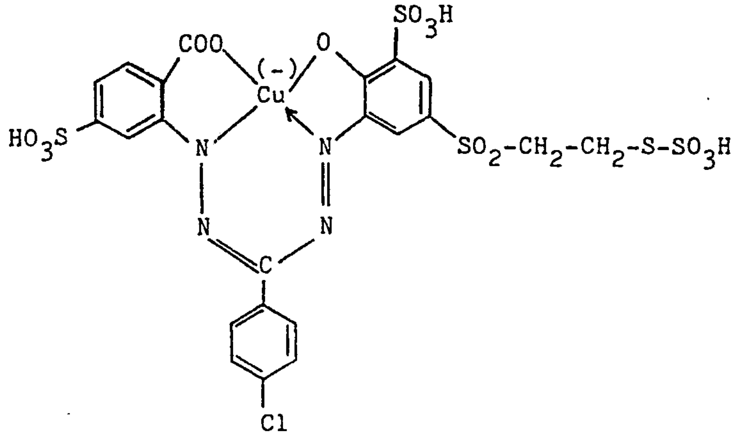

in Form eines elektrolythaltigen dunklen Pulvers. Sie färbt entsprechend den üblichen Applikations- und Fixiermethoden für faserreaktive Farbstoffe Cellulosefasermaterialien in tiefen, klaren, blauen Farbtönen mit sehr guten Licht- und Naßechtheiten.

Beispiel 6

32,0 Teile des Hydrazons aus 2-Carboxy-phenylhydrazin-4-sulfonsäure und Benzaldehyd werden in 250 Teilen Wasser von 20 bis 25 °C angeschlämmt und mit einer wäßrigen Natronlauge bei einem pH-Wert von 6,5 bis 7 gelöst. 150 Volumenteile einer Kupfersulfatlösung, die 25 Teile Kupfersulfat enthält, werden hinzugegeben, wobei der pH-Wert bei 6 bis 7 gehalten wird. Diese Lösung versetzt man mit der wäßrigen Lösung des aus 39,3 Teilen 4-(β-Thio-sulfatoäthylsulfonyl)-6-sulfo-2-aminophenol durch übliche Diazotierung erhaltenen Diazoniumsalzes ; bei Zugabe der Diazoniumsalzlösung wird mit Natriumcarbonat ein pH-Wert von 5,5 bis 6,5 gehalten. Man rührt das Reaktionsgemisch eine Stunde zur Beendigung der Kupplungs und Metallisierungsreaktion nach und gibt dann zur Einstellung eines pH-Wertes von 1 etwa 30 Volumenteile konzentrierte Salzsäure hinzu. Diese stark saure Lösung wird eine Stunde lang nachgerührt und sodann mit Kaliumcarbonat auf einen pH-Wert von 5,5 gestellt. Mittels Kaliumchlorid wird die gebildete Kupferkomplexformazanverbindung ausgefällt und abfiltriert, mit verdünnter wäßriger Kaliumchloridlösung gewaschen und bei 80 °C gut getrocknet.

Die so erhaltene Kupferkomplexverbindung besitzt, in Form der freien Säure geschrieben, die Formel

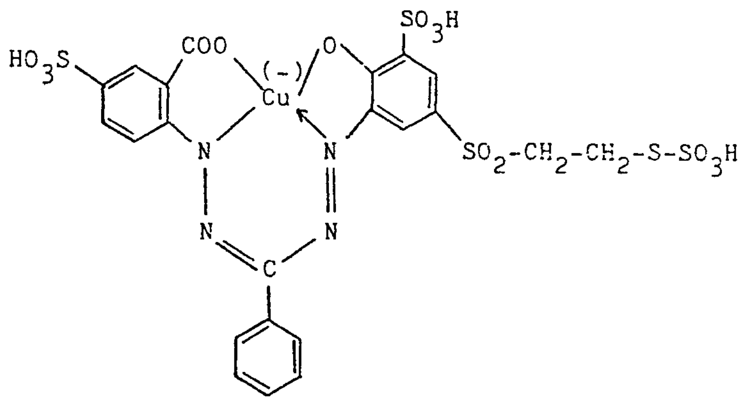

Sie besitzt sehr gute Farbstoffeigenschaften, löst sich in Wasser mit blauer Farbe und besitzt in der Güte ihrer färberischen Eigenschaften und der Echtheitseigenschaften der so hergestellten Färbungen und Drucke ähnlich gute Vorzüge wie der in Beispiel 1 beschriebene erfindungsgemäße Formazanfarbstoff.

Beispiel 7

35,5 Teile des Hydrazons aus 2-Carboxy-phenylhydrazin-4-sulfonsäure und 2-Chlor-benzaldehyd werden in 200 Teilen Wasser und 20 bis 25 °C angeschlämmt und mit einer wäßrigen Natronlauge bei einem pH-Wert von 6,5 bis 7 gelöst. Zu dieser Lösung läßt man gleichzeitig die wäßrige Diazoniumsalzlösung des durch übliche Dioazotierung von 39,3 Teilen 4-(β-Thiosulfatoäthylsulfonyl)-6-sulfo-2-aminophenol erhaltenen Diazoniumsalzes und 100 Volumenteile einer wäßrigen 1-molaren Kupfersulfatlösung (die Diazoniumsalzlösung und die Kupfersulfatlösung können zuvor auch vereinigt werden) innerhalb von 15 bis 25 Minuten hinzulaufen und hält dabei die Temperatur zwischen etwa 5 und 20 °C, vorzugsweise 10 bis 15 °C, und den pH-Wert mit etwa 19 Teilen Natriumcarbonat auf 5,5 bis 6,5. Diese Reaktionsmischung läßt man noch etwa eine Stunde bei 15 bis 25 °C rühren und stellt sodann mit etwa 30 Volumenteilen konzentrierter Salzsäure auf einen pH-Wert von 1 ein. Die saure Lösung wird eine Stunde lang bei etwa 20 °C gerührt und danach mit Kaliumcarbonat auf einen pH-Wert von 5,5 gestellt ; die gebildete Kupferkomplexformazan-Verbindung wird mit Kaliumchlorid ausgefällt, abfiltriert, mit verdünnter wäßriger Kaliumchloridlösung gewaschen und bei 80 °C gut getrocknet.

Es wird ein dunkles Pulver erhalten, das das Alkalimetallsalz, vorwiegend das Kaliumsalz, der Verbindung der Formel

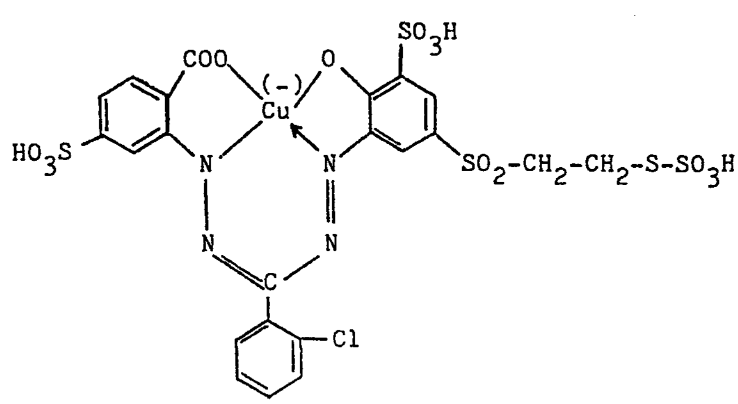

zusammen mit Elektrolyt (Kaliumchlorid) enthält. Diese Kupferkomplexverbindung besitzt sehr gute Farbstoffeigenschaften und färbt Cellulosefasermaterialien nach üblichen Applikations- und Fixierverfahren für faserreaktive Farbstoffe in rotstichig blauen Tönen mit guten Echtheiten, insbesondere guten Lichtechtheiten.

Beispiel 8 bis 39

Verfährt man in erfindungsgemäßer Verfahrensweise zur Herstellung der erfindungsgemäßen Verbindungen der allgemeinen Formel (1) mit Y der β-Thiosulfatoäthyl-Gruppe, beispielsweise analog den obigen Ausführungsbeispielen 1, 3, 5, 6 oder 7, und setzt hierzu die in den nachfolgenden Tabellenbeispielen erwähnten Ausgangsverbindungen und das entsprechende kupferabgebende Salz ein, so erhält man die erfindungsgemäßen β-Thiosulfatoäthylsulfonyl-Kupferkomplexformazanverbindungen in ebenfalls guter Ausbeute. Sie besitzen gute färberische Eigenschaften und liefern Färbungen und Drucke auf Polyamid- und Polyurethanfasermaterialien, insbesondere auf Cellulosefasermaterialien mit guten Echtheiten und den in der Tabelle angegebenen Farbtönen.

Verbindung der allgemeinen Formel (1) aus Ausgangsverbindungen :

| Bsp. | Hydrazin-komponente (A) | Aldehyd-komponente (B) | Amin der Formel (3) | komplex-bildendes Metall | Farbton auf Cellulose |
|---|---|---|---|---|---|
| 8 | 2-Carboxy-4-sulfo-phenyl-hydrazin | 2-Sulfo-benz-aldehyd | 4-(β-Thiosul-fatoäthylsul-fonyl)-6-sulfo-2-aminophenol | Cu | blau |
| 9 | 2-Hydroxy-5-(N,N-dime-thyl-sulf-amoyl)-phe-nylhydrazin | 3-Sulfo-benz-aldehyd | dito | Cu | grün-stichig blau |
| 10 | 2-Carboxy-4-sulfo-phenyl-hydrazin | 4-Methoxy-benzalde-hyd | dito | Cu | grün-stichig blau |
| 11 | dito | 4-Carboxy-benzalde-hyd | dito | Cu | grün-stichig-blau |
| 12 | 2-Hydroxy-4-sulfo-6-nitro-naphthyl-1-hydrazin | 3-Sulfo-benz-aldehyd | dito | Cu | grün |
| 13 | 2-Carboxy-4-sulfo-phenyl-hydrazin | 4-Sulfo-benz-aldehyd | dito | Cu | blau |
| 14 | dito | 2-Hydroxy-benzaldehyd | dito | Cu | grün-stichig blau |
| 15 | dito | 1-Naphth-aldehyd | dito | Cu | grün-stichig blau |
| 16 | dito | Furyl-2-al-dehyd | dito | Cu | blau-stichig grün |
| 17 | dito | 3-Sulfo-benz-aldehyd | dito | Cu | grün-stichig blau |
| 18 | dito | 2-Chlor-benz-aldehyd | dito | Cu | rot-stichig |

(Fortsetzung)

| Bsp. | Hydrazin-komponente (A) | Aldehyd-komponente (B) | Amin der Formel (3) | komplex-bildendes Metall | Farbton auf Cellu-lose |
|---|---|---|---|---|---|
| 19 | 2-Carboxy-5-sulfo-phenyl-hydrazin | 4-Chlor-benz-aldehyd | dito | Cu | blau |
| 20 | dito | 3-Sulfo-benz-aldehyd | dito | Cu | grün-stichig blau |
| 21 | dito | 2,4-Dichlor-benzaldehyd | dito | Cu | rot-stichig blau |
| 22 | dito | 2-Methoxy-benzaldehyd | dito | Cu | rot-stichig blau |
| 23 | dito | Zimtaldehyd | dito | Cu | gelb-stichig-grün |
| 24 | dito | 3-Nitrobenz-aldehyd | dito | Cu | grün-stichig blau |
| 25 | 2-Carboxy-phenylhy-drazin | 2,4-Disulfo-benzaldehyd | dito | Cu | rot-stichig blau |
| 26 | dito | 4-Sulfobenz-aldehyd | dito | Cu | blau |
| 27 | dito | 4-Chlor-2-sulfo-benz-aldehyd | dito | Cu | blau |
| 28 | dito | 2-Sulfo-benz-aldehyd | dito | Cu | rot-stichig blau |
| 29 | 2-Carboxy-4-nitro-phenyl-hydrazin | 4-Sulfobenz-aldehyd | dito | Cu | blau-stichig grün |
| 30 | 2-Carboxy-4-chlor-phenyl-hydrazin | 2-Sulfo-benz-aldehyd | dito | Cu | rot-stichig blau |
| 31 | 2-Hydroxy-4-methylsulfo-nyl-phenyl-hydrazin | dito | dito | Cu | blau |
| 32 | 2-Carboxy-4-methoxy-phe-nylhydrazin | dito | dito | Cu | rot-stichig blau |
| 33 | 2-Hydroxy-5-sulfo-phe-nylhydrazin | Benzaldehyd | dito | Cu | grün-stichig-blau |
| 34 | dito | 3-Sulfo-benz-aldehyd | dito | Cu | grün-stichig blau |

(Fortsetzung)

| Bsp. | Hydrazin-komponente (A) | Aldehyd-komponente (B) | Amin der Formel (3) | komplex-bildendes Metall | Farbton auf Cellu-lose |
|---|---|---|---|---|---|
| 35 | dito | 2-Chlor-benz-aldehyd | dito | Cu | rot-stichig-blau |
| 36 | 2-Hydroxy-3-carboxy-5-sulfo-phe-nylhydrazin | 4-Carbometh-oxy-benzal-dehyd | dito | Cu | grün-stichig blau |
| 37 | dito | Benzaldehyd | dito | Cu | grün-stichig blau |
| 38 | 2-Hydroxy-4,6-disulfo-naphthyl-1-hydrazin | 2-Chlor-benz-aldehyd | dito | Cu | blau-grün |

Beispiel 39

21,7 Teile 4-(β-Hydroxyäthylsulfonyl)-2-aminophenol werden in 46,0 Teile 100 %ige Schwefelsäure eingetragen ; sodann werden bei 120 °C 32,0 Teile 65 %iges Oleum langsam innerhalb von 2 bis 3 Stunden hinzugegeben und das Reaktionsgemisch bei 120 °C während 1 bis 2 Stunden zur Bildung der 4-(β-Sulfatoäthylsulfonyl)-2-aminophenol-6-sulfonsäure gerührt. Danach wird das Reaktionsgemisch abgekühlt und auf 350 Teile Eis gerührt, mit 50 Teilen Calciumcarbonat kongosauer abgestumpft und anschließend in üblicher Weise mittels einer wäßrigen Natriumnitritlösung diazotiert. Sodann gibt man weitere 35 Teile Calciumcarbonat bis zu einem pH-Wert von 4-5 zu und versetzt rasch mit einer neutralen Lösung von 32,0 Teilen des Hydrazons aus 2-Carboxyphenylhydrazin-4-sulfonsäure mit Benzaldehyd in 300 Teilen Wasser. Hierbei steigt der pH-Wert auf etwa 6,5. Es werden nun innerhalb von 15 Minuten tropfenweise bei einer Temperatur von 10-15 °C 100 Volumenteile einer wäßrigen 1-molaren Kupfersulfatlösung zugegeben ; bei einem pH-Wert von 5,5-6,5 wird noch 1 Stunde nachgerührt, sodann mit 20 %iger wäßriger Schwefelsäure ein pH-Wert von etwa 1 eingestellt. Nach einstündigem Rühren wird mit etwa 15 Teilen Calciumcarbonat der pH auf einen Wert von 6 zurückgestellt, das gebildete Calciumsulfat abgesaugt und das Filtrat mit 12 Volumenteilen einer konzentrierten wäßrigen Natronlauge bei einer Temperatur von 15-25 °C unter Rühren auf einen pH-Wert von 12,5 gestellt. Die erfindungsgemäße Vinylsulfonylverbindung entsteht rasch, und die Umsetzung ist nach 30-40 Minuten quantitativ beendet. Man stellt mit 25 Volumenteilen einer 20 %igen wäßrigen Schwefelsäure einen pH-Wert von 5 ein, gibt Natriumoxalat hinzu und rührt mehrere Stunden, klärt mit Kieselgur und isoliert die gebildete Vinylsulfonylverbindung beispielsweise durch Eindampfen der Lösung bei einem pH-Wert von 5,5 (bspw. bei 60 °C unter reduziertem Druck) oder durch Sprühtrocknung.

Es wird ein dunkles Pulver erhalten, das sich in Wasser mit dunkelbauer Farbe löst. Es enthält als elektrolythaltiges Pulver das Alkalimetallsalz, vorwiegend das Natriumsalz, der Verbindung der Formel

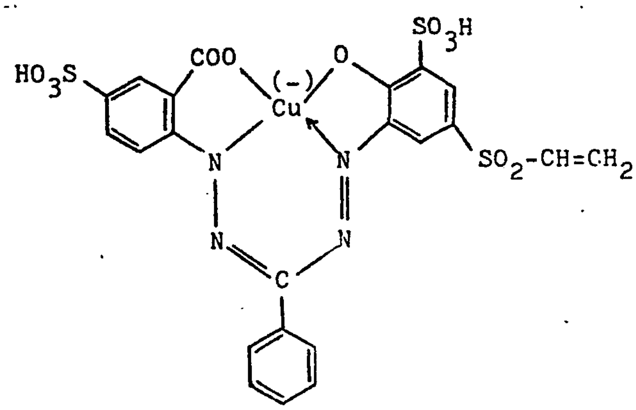

Diese Verbindung eignet sich sehr gut als Farbstoff und färbt Baumwolle und regenerierte Cellulosefasern aus langer Flotte in Gegenwart eines säurebindenden Mittels in reinen blauen Farbtönen.

Die in üblicher Weise nach 10-minütigem Seifen und Spülen mit Wasser nachbehandelten Färbungen zeigen sich als sehr licht- und naßecht. Von den Naßechtheiten sind insbesondere die Waschechtheit und die alkalische und saure Schweißechtheit hervorzuheben.

## Beispiel 40

32,0 Teile des Hydrazons aus 2-Carboxy-phenylhydrazin-4-sulfonsäure und Benzaldehyd in 250 Teilen Wasser von 20-25 °C werden angeschlämmt und mit konzentrierter wäßriger Natronlauge bei einem pH-Wert von 6,5-7 gelöst. Diese Lösung wird bei einem pH-Wert von etwa 6 und einer Temperatur von 5-15 °C mit einer wäßrigen Diazoniumsalzlösung, die durch übliche Diazotierung von 27,9 Teilen 4-Vinylsulfonyl-6-sulfo-2-aminophenol erhalten wurden, und anschließend tropfenweise mit einer wäßrigen Lösung von 25 Teilen kristallisiertem Kupfersulfat in 150 Teilen Wasser bei einer Temperatur von 10 bis 15 °C innerhalb von 15 Minuten versetzt, wobei man in beiden Fällen den pH-Wert mittels insgesamt 19 Teilen Natriumcarbonat auf 5,5-6,5 hält. Man rührt noch 1-2 Stunden bis zur Beendigung der Kupplungsreaktion bei Raumtemperatur nach und stellt sodann die Reaktionslösung mit 30 Volumenteilen konzentrierter wäßriger Salzsäure auf einen pH-Wert von etwa 1. Es wird 1 Stunde nachgerührt, sodann mit etwa 15 Teilen Natriumcarbonat auf einen pH-Wert von 5,5 gestellt. Mittels Natriumchlorid wird die gebildete Kupferkomplexformazanverbindung ausgefällt und abfiltriert, mit verdünnter wäßriger Natriumchloridlösung gewaschen und bei 80 °C gut getrocknet. Man erhält ein dunkles elektrolythaltiges Pulver, das die erfindungsgemäße, im Beispiel 39 beschriebene Vinylsulfonyl-Formazankupferkomplexverbindung enthält. Diese zeigt die gleichen guten färberischen Eigenschaften und ergibt ebenfalls die gleich guten echten, farbstarken Färbungen.

## Beispiel 41

Es wird gemäß den Angaben des Beispieles 40 eine wäßrige Lösung aus 32 Teilen des Hydrazons aus 2-Carboxy-phenylhydrazin-5-sulfonsäure und Benzaldehyd hergestellt. Diese Lösung wird mit der wäßrigen Diazoniumsalzlösung aus 37,7 Teilen eines auf übliche Weise diazotierten 4-(β-Sulfatoäthylsulfonyl)-6-sulfo-2-aminophenols versetzt, wobei die Temperatur 15 °C nicht überschreiten soll und der pH-Wert auf 5,5-6,5 gehalten wird. 100 Volumenteile einer wäßrigen 1-molaren Kupfersulfatlösung werden danach innerhalb von 15 Minuten zugetropft, wobei der pH-Wert zwischen 5,5 und 6,5 mittels Natriumcarbonat gehalten wird. Es wird eine Stunde weitergerührt und sodann der pH auf einen Wert von etwa 1 mittels 30 Volumenteilen konzentrierter Salzsäure eingestellt. Diese stark saure Reaktionsmischung wird eine Stunde nachgerührt und sodann mit etwa 18 Teilen Natriumcarbonat auf einen pH-Wert von 6,8-7,2 neutralisiert. — Zur Überführung der in der Lösung enthaltenen β-Sulfatoäthylsulfonyl-Kupferkomplexformazanverbindung in die erfindungsgemäße Vinylsulfonyl-Verbindung wird die Lösung auf 50 bis 55 °C erwärmt; bei dieser Temperatur werden innerhalb von 5-10 Minuten 21 Teile Natriumcarbonat in 76 Teilen Wasser unter Rühren zugegeben. Hierbei steigt der pH-Wert auf etwa 9,2 an. Zur vollständigen Umsetzung wird noch 30-40 Minuten nachgerührt, sodann etwa 16 %ige Salzsäure bis zu einem pH-Wert von 5,5 zugegeben. Die gebildete Kupferkomplexformazanverbindung wird mittels Kaliumchlorid ausgefällt, abfiltriert, mit verdünnter wäßriger Kaliumchloridlösung gewaschen und bei 80 °C gut getrocknet.

Es wird ein elektrolythaltiges Pulver erhalten, das das Alkalimetallsalz, vorwiegend Kaliumsalz, der Verbindung der Formel

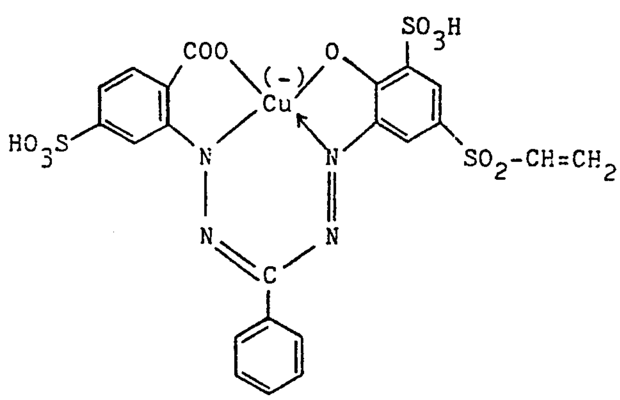

enthält. Diese besitzt sehr gute faserreaktive Farbstoffeigenschaften und färbt insbesondere Cellulosefasermaterialien nach den in der Technik üblichen Applikations- und Fixiermethoden in tiefen reinen blauen Farbtönen mit sehr guten Licht- und Naßechtheiten.

Beispiele 42 bis 72

Verfährt man in erfindungsgemäßer Verfahrensweise zur Herstellung der erfindungsgemäßen Verbindungen der allgemeinen Formel (1) mit Y der Vinylgruppe, beispielsweise analog den obigen Ausführungsbeispielen 2, 4, 39, 40 oder 41, und setzt hierzu die in den nachfolgenden Tabellenbeispielen erwähnten Ausgangsverbindungen und das entsprechende kupferabgebende Salz ein, so erhält man die erfindungsgemäßen Vinylsulfonyl-Kupferkomplexformazanverbindungen in ebenfalls guter Ausbeute. Sie besitzen gute färberische Eigenschaften und liefern Färbungen und Drucke auf Polyamid- und Polyurethanfasermaterialien, insbesondere auf Cellulosefasermaterialien mit guten Echtheiten und den in der Tabelle angegebenen Farbtönen.

Verbindung der allgemeinen Formel (1) aus Ausgangsverbindungen :

| Bsp. | Hydrazinkomponente (A) | Aldehydkomponente (B) | Amin der Formel (3) | komplexbildendes Metall | Farbton auf Cellulose |
|---|---|---|---|---|---|
| 42 | 2-Carboxy-4-sulfo-phenylhydrazin | 2-Sulfo-benzaldehyd | 4-Vinylsulfonyl-6-sulfo-2-aminophenol | Cu | blau |
| 43 | 2-Hydroxy-5-(N,N-dimethyl-sulfamoyl)-phenylhydrazin | 3-Sulfo-benzaldehyd | dito | Cu | grünstichig blau |
| 44 | 2-Carboxy-4-sulfo-phenylhydrazin | 4-Methoxybenzaldehyd | dito | Cu | grünstichig blau |
| 45 | dito | 4-Carboxybenzaldehyd | dito | Cu | grünstichig-blau |
| 46 | 2-Hydroxy-4-sulfo-6-nitronaphthyl-1-hydrazin | 3-Sulfo-benzaldehyd | dito | Cu | grün |
| 47 | 2-Carboxy-4-sulfo-phenylhydrazin | 4-Sulfo-benzaldehyd | dito | Cu | blau |
| 48 | dito | 2-Hydroxybenzaldehyd | dito | Cu | grünstichig blau |
| 49 | dito | 1-Naphthaldehyd | dito | Cu | grünstichig blau |
| 50 | dito | Furyl-2-aldehyd | dito | Cu | blaustichig grün |
| 51 | dito | 3-Sulfo-benzaldehyd | dito | Cu | grünstichig blau |
| 52 | dito | 2-Chlor-benzaldehyd | dito | Cu | rotstichig blau |
| 53 | 2-Carboxy-5-sulfo-phenylhydrazin | 4-Chlor-benzaldehyd | dito | Cu | blau |

(Fortsetzung)

| Bsp. | Hydrazin-komponente (A) | Aldehyd-komponente (B) | Amin der Formel (3) | komplex-bildendes Metall | Farbton auf Cellu-lose |
|---|---|---|---|---|---|
| 54 | dito | 3-Sulfo-benz-aldehyd | dito | Cu | grün-stichig blau |
| 55 | dito | 2,4-Dichlor-benzaldehyd | dito | Cu | rot-stichig blau |
| 56 | dito | 2-Methoxy-benzaldehyd | dito | Cu | rot-stichig blau |
| 57 | dito | Zimtaldehyd | dito | Cu | gelb-stichig-grün |
| 58 | dito | 3-Nitrobenz-aldehyd | dito | Cu | grün-stichig blau |
| 59 | 2-Carboxy-phenylhy-drazin | 2,4-Disulfo-benzaldehyd | dito | Cu | rot-stichig blau |
| 60 | dito | 4-Sulfobenz-aldehyd | dito | Cu | blau |
| 61 | 2-Carboxy-phenylhy-drazin | 4-Chlor-2-sulfo-benz-aldehyd | dito | Cu | blau |
| 62 | dito | 2-Sulfo-benz-aldehyd | dito | Cu | rot-stichig blau |
| 63 | 2-Carboxy-4-nitro-phenyl-hydrazin | 4-Sulfobenz-aldehyd | dito | Cu | blau-stichig grün |
| 64 | 2-Carboxy-4-chlor-phenyl-hydrazin | 2-Sulfo-benz-aldehyd | dito | Cu | rot-tichig blau |
| 65 | 2-Hydroxy-4-methylsulfo-nyl-phenyl-hydrazin | dito | dito | Cu | blau |
| 66 | 2-Carboxy-4-methoxy-phe-nylhydrazin | dito | dito | Cu | rot-stichig blau |
| 67 | 2-Hydroxy-5-sulfo-phe-nylhydrazin | Benzaldehyd | dito | Cu | grün-stichig-blau |
| 68 | dito | 3-Sulfo-benz-aldehyd | dito | Cu | grün-stichig blau |
| 69 | dito | 2-Chlor-benz-aldehyd | dito | Cu | rot-stichig-blau |

(Fortsetzung)

| Bsp. | Hydrazinkomponente (A) | Aldehydkomponente (B) | Amin der Formel (3) | komplexbildendes Metall | Farbton auf Cellulose |
|---|---|---|---|---|---|
| 70 | 2-Hydroxy-3-carboxy-5-sulfo-phenylhydrazin | 4-Carbomethoxy-benzaldehyd | dito | Cu | grünstichig blau |
| 71 | dito | Benzaldehyd | dito | Cu | grünstichig blau |
| 72 | 2-Hydroxy-4,6-disulfonaphthyl-1-hydrazin | 2-Chlor-benzaldehyd | dito | Cu | blaugrün |

Anwendungsbeispiel 1

Zwecks Färbung von 10 Teilen eines Garnes aus Wolle wird ein wäßriges Bad hergestellt, das aus 0,25 Volumenteilen einer 60 %igen wäßrigen Essigsäure, 0,15 Teilen eines handelsüblichen Egalisierhilfsmittels für Wolle und 0,3 Teilen Ammoniumsulfat in 400 Teilen Wasser besteht. Diese Wolle wird bei einer Temperatur von 30-40 °C und einem pH-Wert des Bades von 5-5,2 darin gut benetzt. Dem Bad wird sodann eine Lösung von 0,2 Teilen des Vinylsulfonyl-Kupferkomplexformazanfarbstoffes von Beispiel 39 in 20 Teilen Wasser unter Rühren zugegeben. Man bewegt die Wolle weiterhin darin und läßt die Temperatur 5 Minuten bei 30-40 °C, erhitzt sodann das Färbebad innerhalb von 40 Minuten auf 85 °C, färbt bei dieser Temperatur 10 Minuten weiter und erhitzt sodann das Färbebad innerhalb von 10 Minuten zum Sieden. Es wird 1 Stunde lang kochend weitergefärbt. Anschließend wird das Bad auf 80 °C abgekühlt. Der verwendete Farbstoff ist auf der Wolle sehr gut aufgezogen. Die Nachbehandlung des gefärbten Wollgarnes kann deshalb im selben Bad erfolgen. Man gibt Ammoniak bis auf einen pH-Wert von 8-8,5 hinzu und behandelt das Material 15 Minuten bei diesem pH und bei einer Temperatur von 80 °C. Man nimmt es heraus, spült es mit warmem und kaltem Wasser und trocknet es. Es wird eine farbstarke blaue Färbung mit den im Beispiel 39 angegebenen sehr guten Gebrauchs- und Fabrikationsechtheiten erhalten.

Anwendungsbeispiel 2

Zur Färbung eines Baumwollgewebes wird eine wäßrige Klotzflotte hergestellt, die im Liter 40 g des Vinylsulfonylfarbstoffes von Beispiel 39, 100 g Harnstoff, 30 g wasserfreies Natriumsulfat und 16 Volumenteile einer wäßrigen 32,5 %igen Natronlauge enthält. Das Baumwollgewebe wird bei Zimmertemperatur mit einer Flottenaufnahme von 80 % des Gewichtes des Baumwollgewebes foulardiert, auf eine Docke aufgewickelt, in eine Plastikfolie gehüllt und 24 Stunden lang bei Raumtemperatur liegen lassen. Während dieser Zeit fixiert der Farbstoff. Nach dem Seifen und Spülen in üblicher Weise erhält man eine farbstarke brillante blaue Färbung des Baumwollgewebes, die die im Beispiel 39 genannten guten Gebrauchs- und Fabrikationsechtheiten aufweist.

Anwendungsbeispiel 3

Zur Färbung eines Baumwollgewebes wird ein wäßriges Färbebad hergestellt, das in 2 000 Volumenteilen 5 Teile des Vinylsulfonylfarbstoffes von Beispiel 41, 10 Teile wasserfreies Natriumsulfat, 10 Teile wasserfreies Natriumcarbonat und 4 Volumenteile einer 32,5 %igen wäßrigen Natronlauge gelöst enthält. In dieses Färbebad werden 100 Teile eines Baumwollgewebes gegeben, das bei einer Temperatur von 60 °C zwischen 60 und 90 Minuten gefärbt wird. Nach Seifen und Spülen in üblicher Weise erhält man eine farbstarke, brillante blaue Färbung mit den in der Beschreibung angegebenen sehr guten Gebrauchs- und Fabrikationsechtheiten.

Anwendungsbeispiel 4

Zum Bedrucken eines mercerisierten Baumwollgewebes wird eine Druckpaste verwendet, die auf 1 000 Teile 30 Teile des Vinylsulfon-Farbstoffes von Beispiel 40, 50 Teile Harnstoff, 375 Teile Wasser, 500 Teile einer neutralen 4 %igen wäßrigen Alginatverdickung, 15 Teile Natriumbicarbonat und 10 Teile des Natriumsalzes der m-Nitrobenzoesäure enthält. Das Baumwollgewebe wird in üblicher Weise mit dieser Druckpaste bedruckt und nach dem Trocknen 10 bis 15 Minuten lang mit Wasserdampf von 101 bis

1 013 °C gedämpft. Nach diesem Fixierungsvorgang wird das Gewebe in üblicher Weise durch Spülen mit kaltem und warmem Wasser, durch Seifen bei Kochtemperatur und erneutem Spülen mit Wasser und anschließendem Trocknen fertiggestellt. Man erhält einen farbstarken brillanten blauen Druck, der sehr gute Licht- und Naßechtheiten besitzt.

Anwendungsbeispiel 5

Es werden 30 Teile des Vinylsulfon-Farbstoffes von Beispiel 64 in 200 Teilen Wasser von 70 °C gelöst ; diese Lösung wird in 500 Teile einer neutralen oder schwach sauren, 4 %igen Alginatverdickung eingerührt. Mit 270 Teilen Wasser wird diese verdickte Farbstofflösung auf 1 000 Teile aufgefüllt. Mit der so hergestellten Druckpaste wird in üblicher Weise ein Gewebe aus mercerisierter Baumwolle bedruckt, das anschließend getrocknet und zur Fixierung des Farbstoffes durch ein 90 bis 105 °C heißes wäßriges Fixierbad geführt wird, das in 1 000 Teilen Wasser 100 Teile Natriumchlorid, 150 Teile wasserfreies Natriumcarbonat, 50 Teile wasserfreies Kaliumcarbonat und 70 Volumenteile einer 33 %igen wäßrigen Natronlauge enthält. Die Fixierung erfolgt hierbei bereits in wenigen Sekunden, so daß die Durchführung des bedruckten Gewebes sehr schnell ausgeführt werden kann.- Nach dieser Fixierbehandlung wird das Gewebe in üblicher Weise durch Spülen mit kaltem Wasser, durch heißes Waschen, erneutes Spülen mit Wasser und Trocknen fertiggestellt. Man erhält ein egales, rotstichig blaues Druckmuster mit sehr guten Licht- und Naßechtheiten.

Anwendungsbeispiel 6

Zur Färbung eines Baumwollgewebes wird eine wäßrige Klotzflotte hergestellt, die pro 1 000 Volumenteile 40 Teile des Thiosulfatoäthylsulfonylfarbstoffes von Beispiel 3, 100 Teile Harnstoff, 30 Teile wasserfreies Natriumsulfat und 16 Volumenteile einer wäßrigen 32,5 %igen Natronlauge enthält. Das Baumwollgewebe wird bei Zimmertemperatur mit einer Flottenaufnahme von 80 % des Gewichtes des Baumwollgewebes foulardiert, auf eine Docke aufgewickelt, in eine Plastikfolie gehüllt und 24 Stunden lang bei Raumtemperatur liegen lassen. Während dieser Zeit fixiert der Farbstoff. Nach dem Seifen und Spülen in üblicher Weise erhält man eine farbstarke brillante blaue Färbung des Baumwollgewebes mit guten Licht- und Naßechtheiten.

Anwendungsbeispiel 7

Zur Färbung eines Baumwollgewebes wird eine wäßriges Färbebad hergestellt, das in 2 000 Volumenteilen 6 Teile des Thiosulfatoäthylsulfonylfarbstoffes von Beispiel 6, 10 Teile wasserfreies Natriumsulfat, 10 Teile wasserfreies Natriumcarbonat und 4 Volumenteile einer 32,5 %igen wäßrigen Natronlauge gelöst enthält. In dieses Färbebad werden 100 Teile eines Baumwollgewebes gegeben, das bei einer Temperatur von 60 °C zwischen 60 und 90 Minuten gefärbt wird. Nach Seifen und Spülen in üblicher Weise erhält man eine farbstarke, brillante blaue Färbung mit den sehr guten Licht- und Naßechtheiten.

Anwendungsbeispiel 8

Verfährt man in einer der obenbeschriebenen Verfahrensweisen gemäß der vorliegenden Erfindung zum Färben und Bedrucken von Wolle oder von synthetischen Polyamidmaterialien oder von Cellulosefasermaterialien, beispielsweise analog den obigen Anwendungsbeispiel 1 bis 7, und setzt hierfür als Farbstoff erfindungsgemäß eine der in den vorherigen Beispielen 1 bis 72 beschriebenen erfindungsgemäßen Kupferkomplexformazanfarbstoffe ein, so erhält man ebenfalls kräftige Färbungen und Drucke mit guten Echtheiten und den für diese Farbstoffe angegebenen Farbtönen.

**Ansprüche**

1. Kupfer-Formazanverbindungen der allgemeinen Formel (1)

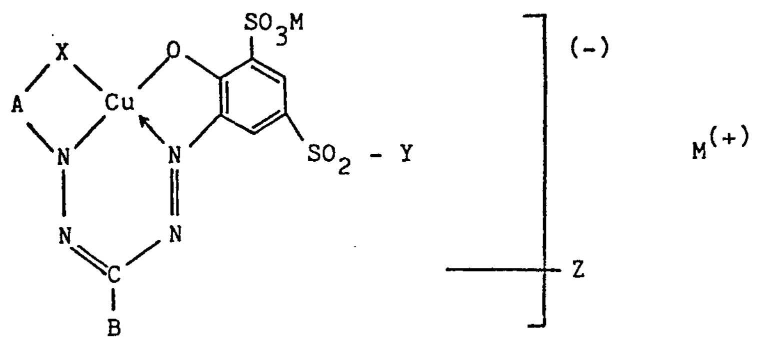 (1)

in welcher bedeuten :

A kann durch Z, wie nachstehend definiert, substituiert sein und ist der Phenylen- oder Naphthylenrest, die durch Substituenten aus der Gruppe Halogen, Nitro, Alkyl von 1 bis 5 C-Atomen, Alkoxy von 1 bis 4 C-Atomen, Carbomethoxy, Carboäthoxy, Alkylsulfonyl von 1 bis 4 C-Atomen, Phenylsulfonyl, Sulfamoyl, N-Mono- und N,N-Dialkylsulfamoyl mit jeweils 1 bis 4 C-Atomen im Alkyl substituiert sein können ;

B kann durch Z substituiert sein und ist eine gerad- oder verzweigt-kettige Alkylgruppe von 1 bis 8 C-Atomen oder eine gerad- oder verzweigt-kettige Alkenylgruppe von 2 bis 8 C-Atomen, wobei diese Alkyl- und Alkenylgruppen noch durch den Phenylrest substituiert sein können, der wiederum durch Substituenten aus der Gruppe Methyl, Äthyl, Methoxy, Äthoxy, Fluor, Chlor, Brom und Sulfamoyl substituiert sein kann, oder ist der Phenyl- oder Naphthylrest, die durch Substituenten aus der Gruppe Hydroxy, Nitro, Halogen, Alkyl von 1 bis 5 C-Atomen, Alkoxy von 1 bis 4 C-Atomen und Carbalkoxy mit 1 bis 4 C-Atomen im Alkylrest substituiert sein können, oder ist der Rest des Furans, Thiophens, Pyrrols, Imidazols, Indols, Pyrazols, Pyridins, Pyrimidins, Chinolins oder Benzimidazols, wobei diese heterocyclischen Reste an den aromatischen Kohlenstoffatomen durch Chlor, Phenyl, Methoxy, Äthoxy, Methyl und Äthyl substituiert sein können und die Wasserstoffatome in den NH-Gruppen dieser Heterocyclen durch Methyl, Äthyl oder Benzyl ersetzt sein können, oder ist ein Wasserstoffatom ;

Z ist eine wasserlöslichmachende Gruppe als ein zu den oben genannten Substituenten von A und B gegebenenfalls zusätzlicher Substituent an A und B, der zwingend im Formazanmolekül einmal, zweimal oder dreimal enthalten ist und an ein aromatisches Kohlenstoffatom oder an ein aliphatisches Kohlenstoffatom von A und B gebunden sein kann ;

Cu ist Kupfer ;

X ist ein Sauerstoffatom oder eine Carbonyloxygruppe der Formel —CO—O—, die in A in ortho-Stellung zum Stickstoffatom an A gebunden sind ;

Y ist die Vinylgruppe oder der β-Thiosulfatoäthyl-Rest ;

M ist ein Wasserstoffatom oder das Äquivalent eines Metalls.

2. Verfahren zur Herstellung der in Anspruch 1 genannten und definierten Verbindungen der allgemeinen Formel (1), dadurch gekennzeichnet, daß man eine aromatische Hydrazonverbindung der allgemeinen Formel (2)

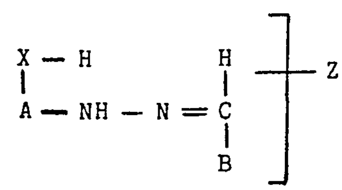

(2)

in welcher A, B, X und Z die in Anspruch 1 genannten Bedeutungen haben, mit der Diazoniumverbindung eines aromatischen Amins der Formel (3)

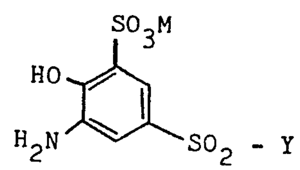

(3)

(mit M und Y der in Anspruch 1 genannten Bedeutung) und mit einem kupferabgebenden Mittel umsetzt.

3. Verfahren zur Herstellung der in Anspruch 1 genannten und definierten Verbindungen der allgemeinen Formel (1) mit Y der Vinylgruppe, dadurch gekennzeichnet, daß man eine Kupferformazanverbindung der allgemeinen Formel

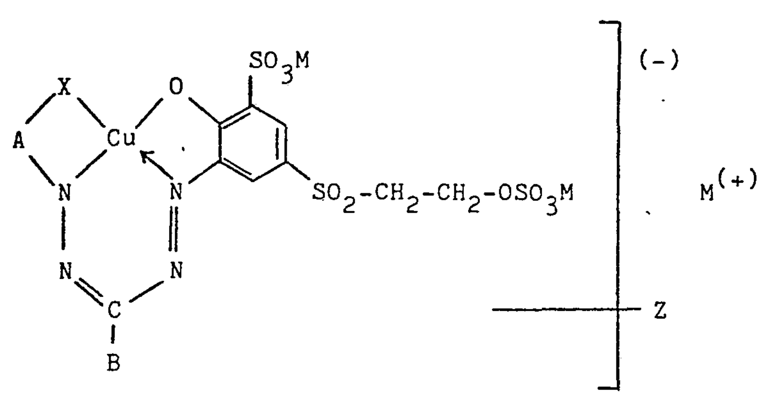

in welcher A, B, X, Z, Cu und M die in Anspruch 1 genannten Bedeutungen haben, bei einem pH-Wert von 8 bis 13 und einer Temperatur bis 60 °C behandelt.

4. Verfahren zur Herstellung der in Anspruch 1 genannten und definierten Verbindung der allgemeinen Formel (1) mit Y der Thiosulfatoäthylgruppe, dadurch gekennzeichnet, daß man eine Kupferformazanverbindung der allgemeinen Formel (1) mit Y der Vinylgruppe mit einem Salz der Thioschwefelsäure umsetzt.

5. Verfahren nach Anspruch 2, 3 oder 4, dadurch gekennzeichnet, daß man nach Herstellung der Verbindung der allgemeinen Formel (1) die Lösung dieser Verbindung auf einen pH-Wert von unterhalb 2 stellt und sie bei einer Temperatur bis 30 °C, gegebenenfalls bis etwa 50 °C, etwa 30 Minuten bis 2 Stunden hält.

6. Verbindungen nach Anspruch 1 der allgemeinen Formel

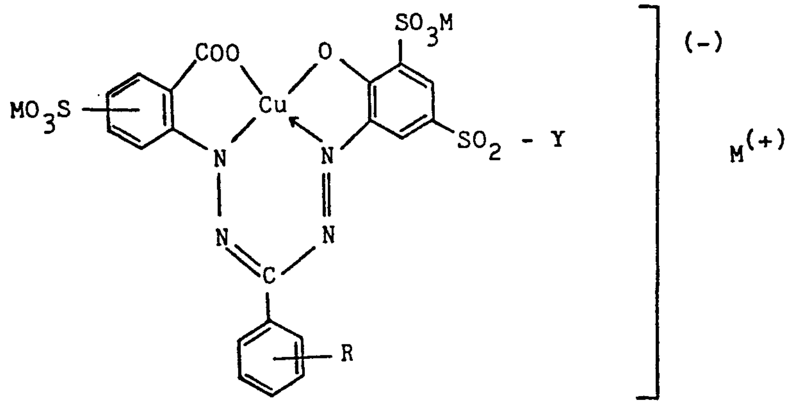

in welcher R ein Wasserstoffatom oder ein Chloratom ist und M und Y die in Anspruch 1 genannte Bedeutung hat.

7. Verbindungen nach Anspruch 1 der allgemeinen Formel

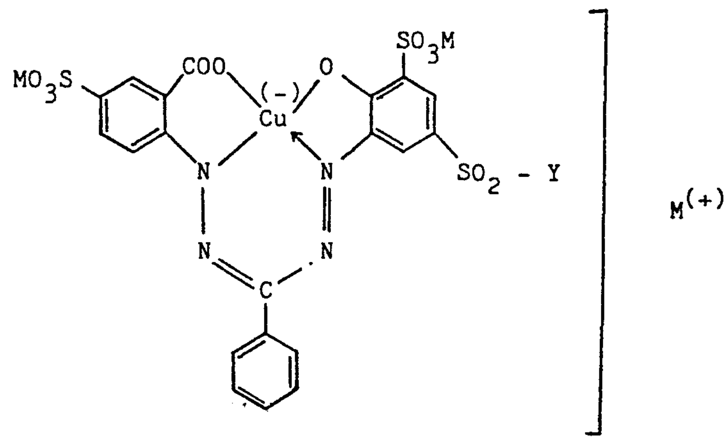

mit M und Y der in Anspruch 1 genannten Bedeutung.

8. Verbindungen nach Anspruch 1 der allgemeinen Formel

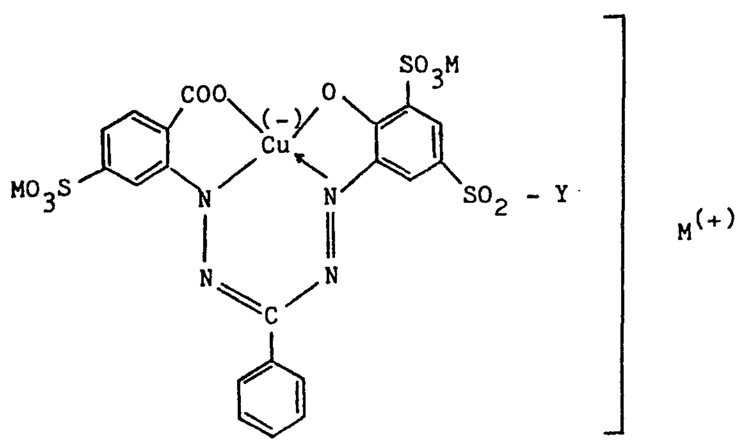

mit M und Y der in Anspruch 1 genannten Bedeutung.

9. Verwendung der in Anspruch 1 definierten Verbindungen als Farbstoffe.

10. Verwendung nach Anspruch 9 zum Färben und Bedrucken von hydroxy-, amino- oder carbonamidgruppenhaltigem Material.

## Claims

1. Copper formazan compounds of the general formula (1)

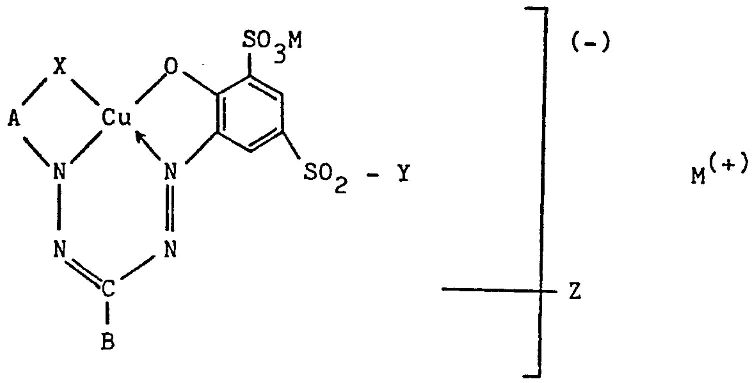

(1)

of the following meanings :

A can be substituted by Z, as defined below, and is the phenylene or naphthylene radical which can be substituted by substituents from the group comprising halogen, nitro, alkyl of 1 to 5 C-atoms, alkoxy of 1 to 4 C-atoms, carbomethoxy, carbethoxy, alkylsulfonyl of 1 to 4 C-atoms, phenylsulfonyl, sulfamoyl, N-mono- and N,N-dialkyl-sulfamoyl with in each case 1 to 4 C-atoms in the alkyl ;

B can be substituted by Z and is a straight- or branchedchain alkyl group of 1 to 8 C-atoms or a straight- or branched-chain alkenyl group of 2 to 8 C-atoms, these alkyl and alkenyl groups can be substituted by the phenyl radical, and this phenyl radical can be substituted by substituents from the group comprising methyl, ethyl, methoxy, ethoxy, fluorine, chlorine, bromine and sulfamoyl, or B is the phenyl or naphthyl radical which both can be substituted by substituents from the group comprising hydroxy, nitro, halogen, alkyl of 1 to 5 C-atoms, alkoxy of 1 to 4 C-atoms and carbalkoxy with 1 to 4 C-atoms in the alkyl radical, or is the radical of the furan, thiophene, pyrrole, imidazole, indole, pyrazole pyridine, pyrimidine, quinoline or benzimidazole, these heterocyclic radicals can be substituted on the aromatic carbon atoms by chlorine, phenyl, methoxy, ethoxy, methyl and ethyl, and the hydrogen atoms in the NH-groups of these heterocyclic rings can be replaced by methyl, ethyl or benzyl, or B is a hydrogen atom ;

Z is a water-solubilizing group bonded to A and B, representing an optionally additional substituent to the above-mentioned substituents of A and B, and which is imperatively present in the formazan molecule once, twice or three-times and which can be bonded to an aromatic carbon atom or to an aliphatic carbon atom of A and B ;

Cu is copper ;

X is an oxygen atom or a carbonyloxy group of the formula —CO—O—, which are bonded to A in the orthoposition relative to the nitrogen atom on A ;

Y is the vinyl group or the β-thiosulfatoethyl radical ;

M is a hydrogen atom or the equivalent of a metal.

2. Process for the preparation of the compounds of the general formula (1) mentioned and defined in claim 1, characterized by that an aromatic hydrazone compound of the general formula (2)

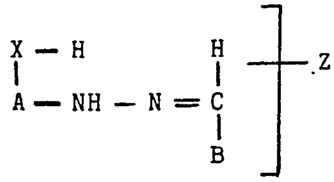

(2)

in which A, B, X and Z have the meanings mentioned in claim 1, is reacted with the diazonium compound of an aromatic amine of the formula (3)

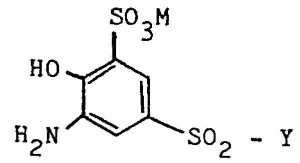

(3)

(with M and Y having the meaning mentioned in claim 1) and with a copper-donating agent.

3. Process for the preparation of the compounds of the general formula (1) mentioned and defined in claim 1, in which, however, Y is the vinyl group, characterized by that a copper formazan compound of the general formula

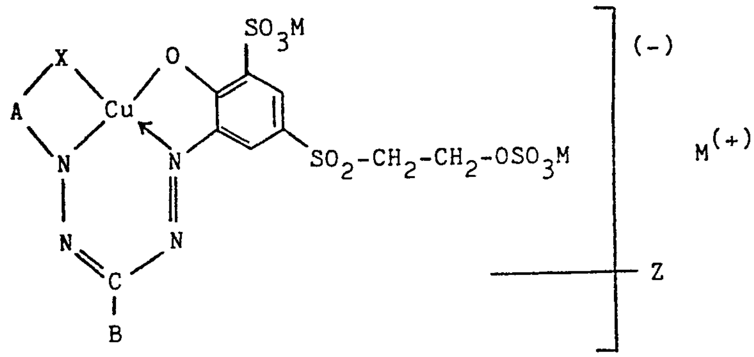

in which A, B, X, Z, Cu and M have the meanings mentioned in claim 1, is treated at a pH-value of 8 to 13 and a temperature of up to 60 °C.

4. Process for the preparation of a compound of the general formula (1) mentioned defined in claim 1, in which, however, Y is the thiosulfatoethyl group, characterized by that a copper formazan compound of the general formula (1) in which Y is the vinyl group, is reacted with a salt of the thiosulfuric acid.

5. Process according to claim 2, 3 or 4, characterized by that, after the preparation of the compound of the general formula (1), the solution of this compound is adjusted to a pH-value of less than 2 and is kept at a temperature of up to 30 °C, opptionally of up to about 50 °C, for about 30 minutes to 2 hours.

6. Compounds according to claim 1, of the general formula

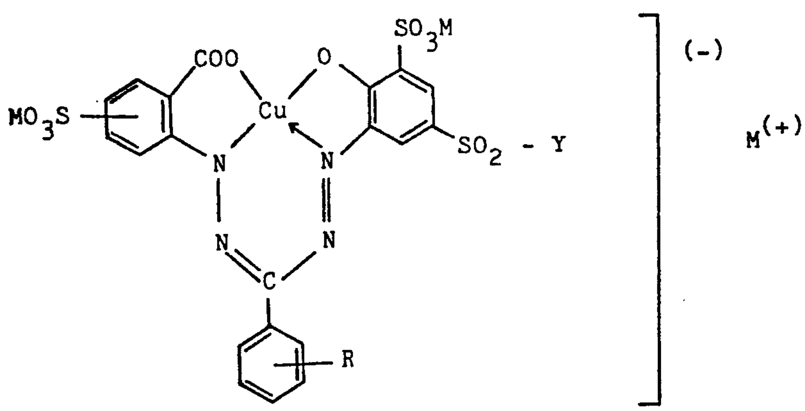

in which R is a hydrogen atom or a chlorine atom and M and Y have the meaning given in claim 1.

7. Compounds according to claim 1, of the general formula

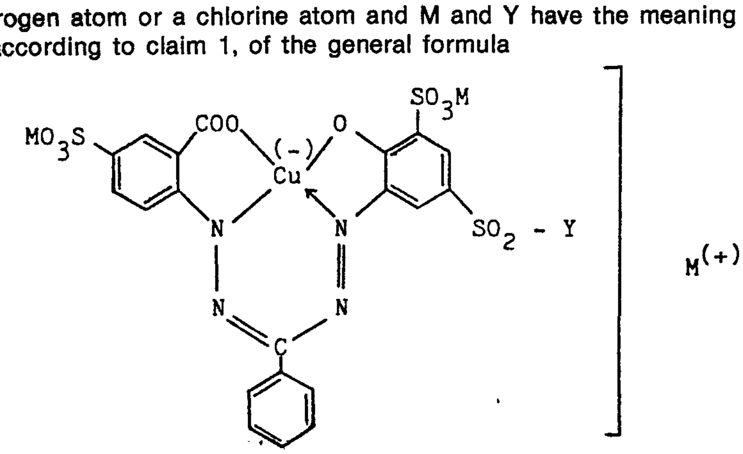

in which M and Y have the meaning given in claim 1.

8. A compound according to claim 1, of the general formula

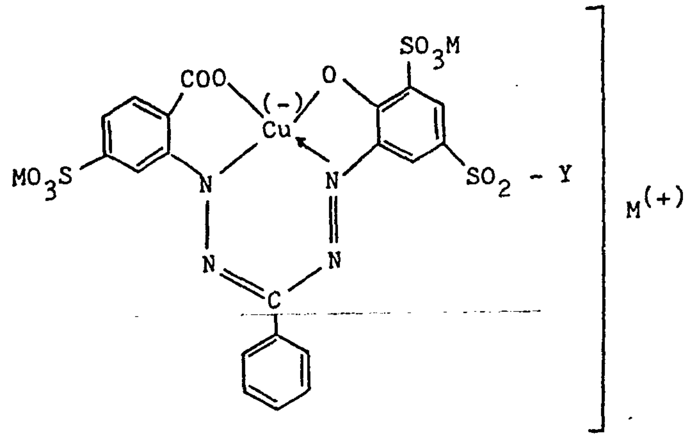

in which M and Y have the meaning given in claim 1.

9. Use of the compounds defined in claim 1, as dyestuffs.

10. Use according to claim 9 for dyeing and printing a material containing hydroxy, amino or carboxamide groups.

**Revendications**

1. Composés formazaniques cuivrés qui répondent à la formule générale (1) :

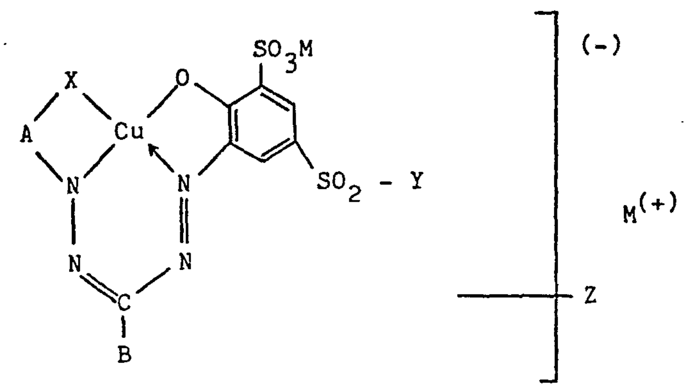

(1)

dans laquelle

A peut porter un substituant Z tel que défini ci-dessous et représente un radical phénylène ou naphtylène éventuellement porteur de substituants pris dans l'ensemble constitué par les halogènes, le groupe nitro, les radicaux alkyles en $C_1$-$C_5$, les radicaux alcoxy en $C_1$-$C_4$, les radicaux méthoxycarbonyle et éthoxycarbonyle, les radicaux alkylsulfonyles en $C_1$-$C_4$, les radicaux phénylsulfonyle et sulfamoyle ainsi que les radicaux N-mono et N,N-dialkyl-sulfamoyles contenant de 1 à 4 atomes de carbone dans chacune des parties alkyles,

B peut porter un substituant Z et représente un radical alkyle, linéaire ou ramifié, contenant de 1 à 8 atomes de carbone ou un radical alcényle, linéaire ou ramifié, contenant de 2 à 8 atomes de carbone, ces radicaux alkyles et alcényles pouvant en outre porter comme substituant un radical phényle qui, à son tour, peut porter des substituants pris dans l'ensemble constitué par les radicaux méthyle, éthyle, méthoxy, éthoxy, fluoro, chloro, bromo et sulfamoyle, ou représente un radical phényle ou naphtyle éventuellement porteur de substituants pris dans l'ensemble constitué par le groupe hydroxy, le groupe nitro, les halogènes, les alkyles en $C_1$-$C_5$, les alcoxy en $C_1$-$C_4$ et les alcoxycarbonyles contenant de 1 à 4 atomes de carbone dans la partie alkyle, ou représente un radical du furanne, du thiophène, du pyrrole, de l'imidazole, de l'indole, du pyrazole, de la pyridine, de la pyrimidine, de la quinoléine ou du benzimidazole, ces radicaux hétérocycliques pouvant porter, sur les atomes de carbone aromatiques, un atome de chlore ou un radical phényle, méthoxy, éthoxy, méthyle ou éthyle, et les atomes d'hydrogène présents dans les groupes NH de ces hétérocycles pouvant être remplacés par des radicaux méthyles, éthyles ou benzyles, ou représente un atome d'hydrogène,

Z représente un radical hydrosolubilisant qui est, sur A et B, un substituant supplémentaire venant éventuellement s'ajouter aux substituants de A et B mentionnés ci-dessus et qui est obligatoirement contenu, dans la molécule de formazan, en un, en deux ou en trois exemplaires, ce substituant Z pouvant être fixé sur un atome de carbone aromatique ou sur un atome de carbone aliphatique de A ou B,

Cu représente le cuivre,

X représente un atome d'oxygène ou un radical carbonyloxy —CO—O— fixé, sur A, en position ortho relativement à l'atome d'azote de A,

Y représente le radical vinyle ou le radical thiosulfato-2 éthyle, et

M représente un atome d'hydrogène ou l'équivalent d'un métal.

2. Procédé de préparation des composés de formule générale (1) qui ont été mentionnés et définis à la revendication 1, procédé caractérisé en ce qu'on fait réagir une hydrazone aromatique répondant à la formule générale (2) :

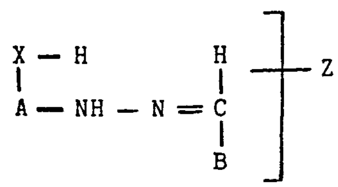

(2)

dans laquelle A, B, X et Z ont les significations données à la revendication 1, avec le composé diazoïque d'une amine aromatique répondant à la formule (3) :

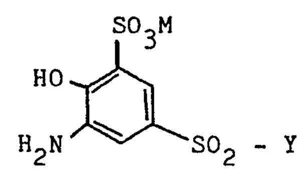

(3)

(dans laquelle M et Y ont les significations données à la revendication 1) et avec un agent donneur de cuivre.

3. Procédé de préparation des composés de formule générale (1) qui ont été mentionnés et définis à la revendication 1 et dans lesquels Y représente le radical vinyle, procédé caractérisé en ce qu'on traite un composé formazanique cuivré répondant à la formule générale :

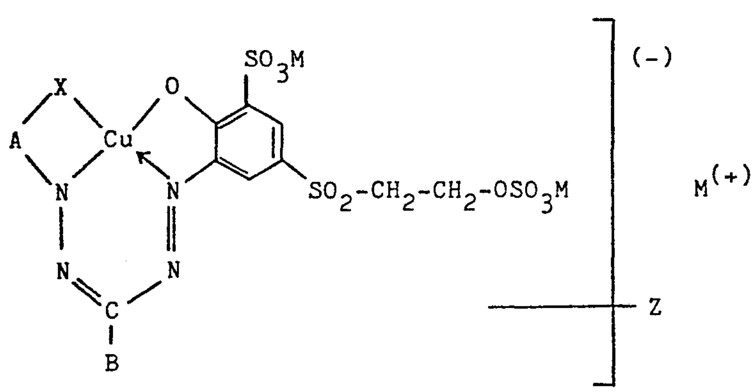

dans laquelle A, B, X, Z, Cu et M ont les significations données à la revendication 1, à un pH de 8 à 13 et à une température pouvant aller jusqu'à 60 °C.

4. Procédé de préparation des composés de formule générale (I) qui ont été mentionnés et définis à la revendication 1 et dans lesquels y représente le radical thiosulfatoéthyle, procédé caractérisé en ce qu'on fait réagir un composé formazanique cuivré de formule générale (1) dans lequel Y représente le radical vinyle, avec un sel de l'acide thiosulfurique.

5. Procédé selon l'une quelconque des revendications 2, 3 et 4, caractérisé en ce que, après avoir préparé le composé de formule générale (1), on ajuste le pH de la solution de ce composé à une valeur inférieure à 2 et on maintient ladite solution à une température pouvant aller jusqu'à 30 °C, éventuellement jusqu'à environ 50 °C, pendant environ 30 minutes à 2 heures.

6. Composés selon la revendication 1, qui répondent à la formule générale :

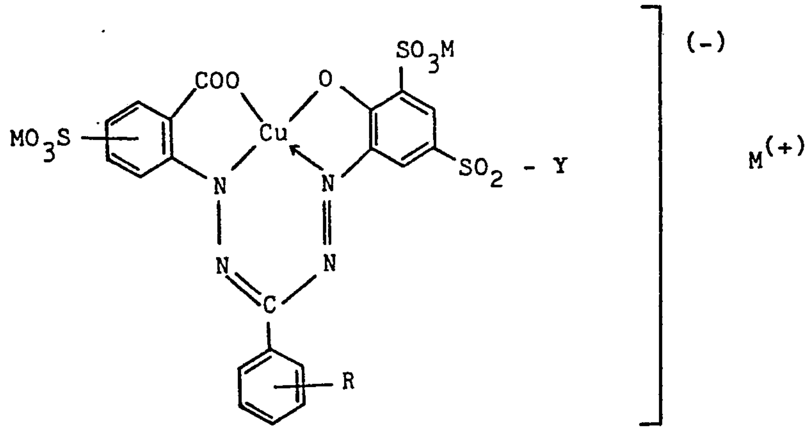

dans laquelle R représente un atome d'hydrogène ou un atome de chlore, et M et Y ont les significations données à la revendication 1.

7. Composés selon la revendication 1 qui répondent à la formule générale :

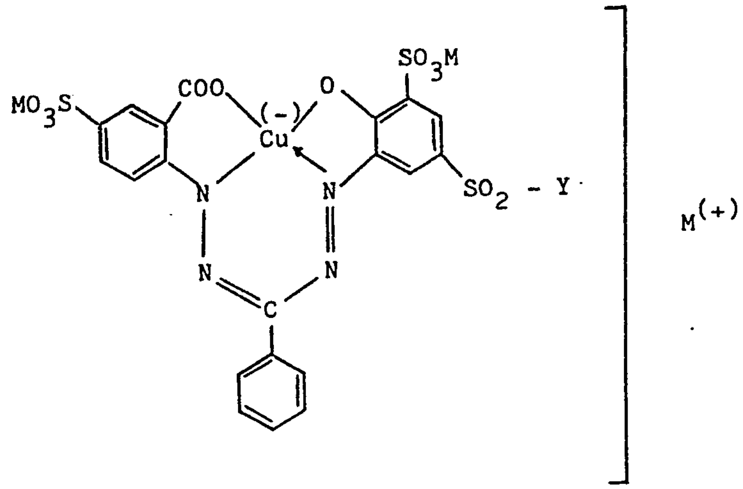

dans laquelle M et Y ont les significations données à la revendication 1.

8. Composés selon la revendication 1, qui répondent à la formule générale :

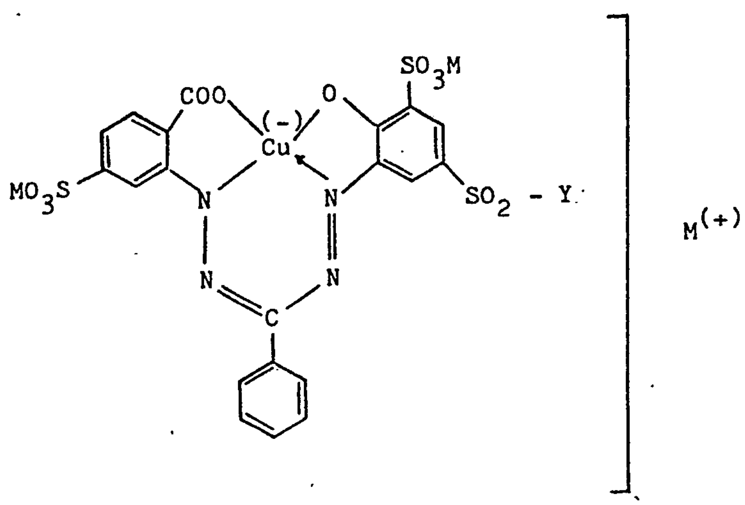

dans laquelle M et Y ont les significations données à la revendication 1.

9. Application des composés définis à la revendication 1 comme colorants.

10. Application selon la revendication 9, pour la teinture et l'impression d'une matière contenant des groupes hydroxy, des groupes amino ou des groupes carbamoyles.